# EUROPEAN PATENT APPLICATION

(11) **EP 4 666 846 A1**
(43) Date of publication of application: **24.12.2025**
(21) Application number: 25183245.7
(22) Date of filing: 17.06.2025
(51) Int. Cl.: A01K 1/01, A01K 1/015

(54) **CLEANING UNIT FOR EMISSION CONTROL IN A LIVESTOCK FARMING ENVIRONMENT AND A METHOD FOR CLEANING A FLOOR OF A STABLE FLOOR ARRANGEMENT**

(30) Priority: 19.06.2024 NL 1044903
(71) Applicant: Phyléus B.V., 5347 JW Oss (NL)
(72) Inventor: De Jong, Gerardus Majella, 5405 NZ Uden (NL)
(74) Representative: Dohmen, Johannes Maria Gerardus

(57) **Abstract**

Cleaning unit (20; 55; 70) arranged to move independently over a load-bearing surface of an at least continuous floor (1) of a manure passage (9) of an arrangement for keeping stable animals (11). The cleaning unit (20) comprises an airflow-suction arrangement (20 - 28) for removing a manure film (12) present on the load-bearing surface of the floor (1). The airflow-suction arrangement comprises at least one air knife (21) located in the suction mouth (28) and connected to air compression means (23) of the cleaning unit to generate a laminar airflow (27) in the suction mouth (28) transversely engaging the manure film (12), for dislodging (47) and collecting the manure film (12) present on the floor during operation. Furthermore, a method is provided for removing such manure film (12).

## Description

### Field of the invention

The present application relates to the control of stable emissions such as ammonia, nitrous oxide, nitrate, or nitrogen emissions resulting from the deposition of urine and solid manure by stable animals on a closed, continuous stable base arrangement. More specifically, the application relates to a cleaning unit and a method for removing, to the extent possible, of solid manure and urine deposited on such a stable base arrangement before same start to react substantially with each other and to form ammonia. Furthermore a computer program product is provided comprising control and communication software for use of the cleaning unit in an arrangement for keeping stable animals for thoroughly cleaning a stable base arrangement using one or more cleaning units.

### Background of the invention

Keeping cattle on a livestock farm has taken various forms in its history of development. A common design for a livestock shed was, until the 1960s, a form in which cattle were housed in stables during the winter day and in pastures during the summer. In the stable, animals were placed side by side and tied up. The animals then stayed in the same place in the stable from autumn to spring. In a fixed place in the stable, the animals stood, lay, calved, ate, and were milked manually if necessary.

From spring to autumn, cattle were mostly grazed outside and did not return to the stables. An exception in that grazing period were the morning and evening cycles when cows returned to the stable briefly to be milked, after which they were let out to pasture again. The main reason for stall milking was that in the same period of the1960s, the milking machine emerged and was often installed in the cattle shed.

The problem of the formation of ammonia, nitrous oxide, carbon dioxide (greenhouse gas) and methane, among others, with the criticized stable emissions and, in particular, nitrogen deposition from a livestock farm in sensitive natural areas, were not yet consciously perceived as an environmental problem at that time. The main reason was that stable emissions did not yet have the magnitude that was seen as problematic because cattle were outside for a large part of the year and could move freely in a relatively large pasture, which meant that the manure and urine, deposited sequentially in the pasture, i.e. one after the other, ended up in different places in the pasture and therefore could not react among themselves to form ammonia.

Ammonia formation in a stable environment occurs because the enzyme urease, found in the solid manure, catalyzes the urea present in the urine to form ammonia. Once urine and solid manure come together, ammonia forms after which the ammonia gas volatilizes from a stable environment.

Due to the described sequentiality of deposition of manure and urine in the field and due to the relatively rapid disappearance of urine in the soil, hardly any ammonia formation will occur in the field. Hence, the relative emission development problems in a stable environment mainly came into play after the 1960s, when other stable systems and livestock management were introduced.

This fact plays an essential role in developments from the 1960s onwards in the possible formation of ammonia gas (NH₃) and other climate-related emissions in stable environments.

In the pre-60s stable, that potential response to arrive at ammonia gas, during the winter period, would be different from after the 60s, because the design of the then cattle stable was advantageous in this respect and had already provided for it to some extent. In the then cattle shed, the depot of solid manure and urine was collected in a wide concrete manure gutter. The standing/lying area and gutter were usually a concrete structure. The manure gutter was located approx. 350 to 400 mm below and behind the standing/laying area. The bottom of the gutter had a slight slope to the outside in relation to the standing/laying area and connected to a second, but smaller narrow sunken gutter integrated in the bottom of the large gutter, approx. 100 mm wide and approx. 100 mm deep. This smaller gutter ran along the length of a cattle shed at a slope to a separate slurry cellar. The term slurry is common and refers mainly to urine slightly mixed with some parts of solid manure.

Relative to the large gutter, this small gutter was closed at the top with a removable, sloping, wooden plank or shield. At the junction of this wooden screening with the gutter bottom of the main gutter, a small slit-shaped space was left where the urine could drain from the main gutter, under a slope, into the small gutter and then into the slurry cellar.

The solid manure, often mixed with straw, which fell into the main gutter and remained behind, was removed from the stable in a daytime fumigation, initially by hand and wheelbarrow or later semi-mechanically, and brought to an above-ground manure heap. These separated products were at a later date applied manually or (semi-)mechanically to the field as fertilization for soil and crops.

In fact, a livestock farm before and around the 1960s had a primary separated manure system, a slurry cellar with mainly urine and a manure heap with mainly solid manure. Also because of the size of the livestock at that time, this manure heap showed a relatively much lower emission development, which is the subject of so much controversy today. Partly because the bulk of urease and urine were already largely separated in the stable and stored separately, so that only a relatively small portion of the two masses could react with each other.

Influenced by the development of agriculture at the time and specifically livestock farming, an entirely new stable design for a livestock farm emerged. Mechanization, scaling-up, science, breeding and selection, European price guarantees for butter and milk, land consolidation, fertilizer application, larger cattle breeds with higher milk yields, increasing labor costs and even later robotization, concentrate feed imports and over-fertilization etc. etc. contributed to a more industrialized form of livestock farming as we know it today. The adverse effects of this no longer seem sustainable in this form for several reasons.

Central to this development is the emergence after the 1960s of a so-called cubicle stable. A design in which cattle are no longer confined in one place, but can roam freely in the stable and the manure can disappear down through an open slatted floor and be collected in a manure pit located under the open slatted floor. The manure and urine collected in the manure cellar is called slurry and the manure cellar is called slurry cellar.

This open slatted floor is usually made of concrete and consists of concrete slabs, sometimes with rubber inserts, which are openwork in a set pattern with mostly rectangular permeable openings in the slab. The image of such a slatted floor slab has often been shown in public, so it is assumed here that the optical image is otherwise clear.

The surface of the bare concrete of an open slatted slab is usually unfinished which, with the normal porosity of concrete, leaves urease in the micro pores to react with urine urea to form ammonia if the reaction time is available.

Optically and by the insights of the time, a logical design, but as it turned out later with a very important missing link, namely the non-existent but (even then) necessary emission control or containment.

In the basement, solid manure and urine are mixed which from then on is called 'slurry' and the basement became a 'slurry cellar'. Visually, the animals have more freedom of movement, and with the emerging mechanization, the farmer can pump the slurry from the slurry cellar with less labor and cost and move it across the land. Much manual work is then further a thing of the past.

The environmental consequences in the form of emissions from agriculture to the air and to soil and groundwater proved irreversible for the time being. Volatilization of ammonia, among others, from the stable environment and precipitation in the field is at the expense of soil acidity with adverse effects on species diversity in the field. Added to this is the use of monocultures of crops by animal husbandry and the widespread use of fertilizers that also emerged during this period. Artificial fertilizers were long seen as the best means of obtaining more growth in plant crops. However, following later insights, it also plays a major role in denigrating the original composition of natural soil life such as the ratio of fungi and bacteria, the organic matter content in the arable soil, the carbon-nitrogen ratio in the soil, the natural resistance to plant diseases, the binding of minerals and the leaching and nitrification of nitrogen (NO₃) to the groundwater and the water-holding and water-storage capacity of the soil.

These problems are not only national, but also international. Public scientific literature shows that the vast majority of ammonia emissions come from agriculture, namely about 85%. More than half of this comes from conventional manure storage (slurry cellars) and the spreading or application of slurry in the field. Broken down by animal, cattle emit more than half of all ammonia, while pigs and poultry together account for about a quarter.

The following can be deduced from various literature sources and publications. Ammonia is a gas with a characteristic, strongly pungent odor. Excess ammonia precipitates in the vicinity of the source and on more distant surfaces and harms the environment. Ammonia (NH₃) is alkaline, but is converted to nitric acid (HNO₃) by oxidation in the air and soil. This acidification is harmful to nutrient-poor forest and natural areas. More than half of the acidification in the Netherlands comes from ammonia emissions. In addition, ammonia leads to eutrophication. Ammonia can cause an excess of nutrients in surface water. This eutrophication also takes place on land.

Plants that thrive on manure-rich soils, such as nettles and brambles, among others, thus get the upper hand in natural areas, while plants that grow on usually poor soils disappear and with them many insects and birds. Nitrate generated from ammonia can also contaminate groundwater. This species-poor flora also leads to an altered ecosystem and also results in a major impoverishment of fauna.

To structurally control these emissions both in the stable environment and in the field, we first consider the stable environment and the complex relationship of causes and effects on emissions.

A current livestock shed environment usually comprises a cubicle stable with compartmentalization where the animals can partly rest, such as in the cubicles, and a part where the animals move freely or stand at a feed fence, the so-called manure passage. The manure passage, i.e. the part over which the animals move freely, usually consists of an open slatted floor of bare concrete, which allows the free-falling manure and urine through the open slats to enter, to a considerable extent, a slurry cellar under the cubicle shed. The size of a slurry cellar usually has a capacity that can hold the manure storage of a shed period (on average from August to February).

In agriculture and specifically in animal husbandry, the understanding has re-emerged that a separation at the source of manure as a solid and urine as a liquid, or levelling the reaction time and circumstance in which ammonia formation can take place, has become an extremely important issue and underlies emission control in a stable and livestock environment, which is technically difficult to achieve in a current stable environment with open slatted floor types and slurry basement collection.

The current and common mixing of manure and urine into slurry in slurry cellars, partly due to the longer storage period in the slurry cellar, leads to excessive ammonia formation in the cellar space above the slurry and, as a result, volatilization through the open slatted floor systems into the stable environment and thus further into the physical environment outside the stable resulting in highly undesirable nitrogen deposition into that environment. As briefly mentioned above, the substance urease in the solid manure reacts with urea in the urine to form ammonia, which further volatilizes from both the slurry cellar through the open slatted floor into the stable environment, and from the not-so-clean surface of the stable floor and further volatilizes into the outside air. Here it spreads to the surrounding area with all the environmental health consequences. The oxidation and deposition when precipitated forms a nitrogen-rich environment and as such constitutes what is generally referred to as the 'nitrogen problem'. Additionally, nitrogen-fertilizer application in the field adds to this.

As a result, more nitrogen thus enters the ecological cycle than would have been the case naturally and the ecosystem cycle is therefore severely disrupted. In addition, mainly in the slurry cellar, in addition to ammonia, other climate-related emissions are formed, including methane (CH₄), hydrocyanic acid gas (HCN), nitrous oxide (N₂O), hydrogen sulfide (H₂S) and carbon dioxide (CO₂). Emissions of these ultimately come at the expense of the species richness of flora and fauna and cause serious disruption to this important balance. Political and legal positions, jurisprudence, and regulations, meanwhile, underpin this all for the better.

The way and extent to which open slatted floors are cleaned in a conventional or regular stable environment still results in a floor field with a mixed layer of urine and solid manure, or a manure film, on the surface of the slatted floor. The mixture almost permanently develops an ammonia-forming process due to the almost constant residence time on the floor with a constant reaction time, thus maintaining this process for a long time and almost continuously.

The open slatted floor is primarily designed to allow manure and urine to pass through to the cellar below the open slatted floor where it is collected as slurry until a time when the slurry from the slurry cellar is sucked up again and further applied to the field or disposed of.

The cattle walk interchangeably over an open slatted floor during the day, depositing solid manure and urine at random times. Across the floor these are mixed by the walking cattle. As the cattle move up and over the open slatted floor, some, but by no means all, of the solid manure mixed with urine moves down through the open slats into the basement while walking.

Some of the solid manure mixed with urine sticks to the vertical space from the surface of the slatted floor to its underside. Consequently, it narrows the openings in the slatted floor, allowing relatively less and less to pass through, but at the same time forming a permanent source of ammonia formation there, over the entire slatted floor area of a livestock shed. On top of the horizontal parts of a slatted floor, a manure film layer of a mixture of solid manure and urine is also left behind.

Remaining manure mixed with urine on the surface of a slatted floor system is pushed away from the surface in certain stables by means of a so-called manure scraper or roughly taken up or pushed away by a so-called regular manure robot or regular cleaning unit.

In the context of the present invention, the term 'regular manure robot' refers to a self-propelled cleaning unit for use in a stable environment of a livestock farm which slides or temporarily picks up and then unloads the mass of manure from a floor in a continuous movement through the stable environment.

Generally, manure scrapers move across a slatted floor over the width of a walking alley or manure passage and move the manure in a unilateral movement to a depot from where it is deposited in the slurry cellar. Manure scrapers only make a back and forth movement across a manure passage in a regular livestock shed. A manure scraper is equipped so that at a preset time and at a repeat frequency, it is mechanically moveable across the manure passage by a chain or cable and in this movement, it pushes the manure mass in front of the scraper ahead of it and dumps it into the manure cellar at the end of a manure passage in a free-fall movement.

The same is done using a manure robot, except that a manure robot has a smaller operative width and therefore moves back and forth across a manure passage more frequently than a manure scraper. Furthermore, a manure robot also slides the solid manure mixed with urine in front of it or picks up this mixture while moving forward and collects it in the robot itself during the working passage and dumps the mass at the end of the stable also in the slurry cellar.

Shoveling the slurry mass away is still relatively most favorable if the solid manure is mixed with urine. Should there be less urine or liquid present during shoveling, the shoveling motion smears the relatively drier solid manure into a relatively thick smear layer as a substantial manure film on the floor field.

Both systems, i.e. the manure scraper and manure robot, aim to remove excess manure mixed with urine from the surface of the slatted floor system, but both regular systems still leave a substantial manure film of solid manure with urine on the slatted floor after the regular manure scraper or manure robot has performed its function. This leaves an emission source that extends over the entire surface of a slatted floor system.

This manure film is characteristic of the application or deployment of a manure scraper or regular manure robot in a conventional livestock shed environment. The urease-urea reaction occurs almost constantly so that the floor field also exhibits an almost permanent ammonia-forming reaction over the entire surface. As such, the manure film remains a major emission source.

In an attempt to reduce stable emissions, many solutions still appear to be limited or blocked in their application by the premise of the need to maintain a slurry cellar. A space under a stable floor, still requiring the stable floor to maintain openings for moving urine or a mixture of urine and solid manure into that space.

As a result, many designs with attempts to reduce emissions have ended up with floor systems that, mindful of the single desire and an attempt to separate solid manure and urine, aim to move urine through a floor system with openings and keep the solid manure on the surface, where it is removed from the floor area by a slider or a manure robot leaving behind another thick substantial manure film over the entire surface of a manure passage where the openings or passages in the floor, during the operation of a regular manure robot or manure scraper, are eventually plugged with solid manure mixed with the residual urine puddle that did not flow to the slurry cellar. Therefore, a concept that does not function well.

The actual operation of a common or regular manure robot such as known, for example, from US patent application US2014/0124000 A1, involves solid manure mixed with at least a residual puddle of urine, being advanced or taken up during operation after which the mass is dumped at a fixed disposal point and ends up in the slurry cellar. A regular manure scraper only moves the solid manure mixed with (a residual puddle) of urine to a fixed disposal point. The working methods of both a regular manure robot and manure scraper mean that a substantial film of manure always remains on the floor. Therefore, in a conventional livestock shed, there will always remain an area of contamination in the openings of the floor field and in leaving a substantial manure film over the entire surface of a floor field. For this reason, many initially permitted floor systems that aimed to provide a solution were also recently banned by the highest Dutch court.

From an animal welfare perspective, the stable air in a conventional cattle shed is constantly contaminated with ammonia gases, methane, carbon dioxide and the highly toxic hydrogen sulfide, among others. The cattle and also the people present in a stable therefore always breathe a mixture of contaminated air during their stay. It is particularly for this reason that (cattle) stables are heavily aerated or equipped with fans to refresh the stable air with outside air.

As for the tread of an open slatted floor system, an animal usually keeps its grip because part of the hoof can push off into the recess of an opening in the open slatted floor. Despite the concrete of a slatted floor system being relatively slippery on the surface, an animal can still maintain a reasonable grip during locomotion or sudden movement because the hoof partially engages in such an opening.

Regarding claw health, this is not ideal and in substantial cases leads to claw problems and lameness of several animals in a herd. Additionally, claw problems are exacerbated by an animal walking through the manure and urine mix with every progressive movement. The floor surface is not clean and initially small wounds on the hoof can be greatly aggravated by constantly walking through a manure-urine layer, leading to substantial loss of condition and production of an animal. In cows, this contamination is also a source of udder infections with the same substantial condition and production losses of the animals.

In the slurry cellar, a mixture of solid manure mixed with urine accumulates during a stable period. This cocktail develops several chemical reactions. First, the urease-urea reaction permanently forms ammonia. This ammonia is volatile and rises and moves through the open slatted floor systems into the stable environment. Furthermore, the stable environment is ventilated and permanently in direct connection with the outside air, allowing ammonia to spread freely to the physical environment.

Besides ammonia development, under the influence of bacteria and local conditions in the slurry cellar, other and new chemical reactions occur in the slurry. From the slurry cellar, therefore, a second stream of emissions including nitrous oxide, carbon dioxide, prussic acid gas and methane also constantly rises via the open slatted floor into the stable environment, and these rise further from there into the outside air, thus burdening the environment. For example, 1 kg of nitrous oxide equals 273 kg of CO₂ equivalent and 1 kg of methane equals 27 kg of CO₂ equivalent.

Apart from permanently adversely affecting the stable climate, this also contributes greatly to multiple climate-related depositions and their adverse effects on the physical environment.

At calendar moments in the year, slurry is pumped from the slurry cellar and applied to the field with appropriate machinery as crop fertilizer or disposed of elsewhere. After application of this manure mass in the field, it also generates substantial emissions of ammonia, methane, greenhouse gas, nitrous oxide, etc. with the widely known odor burden, and after application in the soil, a substantial part of it is also washed out into the groundwater where it contributes to the undesirable nitrification of the groundwater.

When, on the basis of calendar-driven policy, slurry from the slurry cellar is going to be applied or disposed of, it first follows from the logistics that the bulk is mixed. This mixing is primarily necessary to make the mass of solid manure and liquids in the slurry cellar more liquid so that it can be pumped up from the building space for further application. During this mixing phase, there is a very large amount of emission of chemical gases that are dangerous to inhale (including prussic acid gas and nitrous oxide) but also a lot of methane with a real risk of explosion in addition. Many safety precautions are needed at this stage.

In field fertilization, a livestock farmer is bound by restrictions on the maximum amount of nitrogen from animal manure that can be applied per ha. Furthermore, the way the slurry is applied is also bound by a certain method. For instance, the arable soil, the humus-rich upper layer in the field, must be opened up by a disc coulter in the form of a trench, after which the slurry is injected, so to speak. This method aims to introduce the slurry into the soil in such a way as to prevent emissions, as well as odor nuisance, to the outside air.

Field application is usually done with large and heavy machines. Due to the carrying capacity of the soil, it is not always possible to spread the slurry with these heavy machines. Also, compaction of the soil with the heavy machines, due to frequent driving tracks in the field, compromises the necessary aeration of the soil and reduces the water holding capacity of the soil. This, in turn, is at the expense of optimum conditions for crop growth.

On a livestock farm, only a relatively limited amount of its own animal manure may nowadays be applied. The extended amount long in force for the Netherlands, known as the derogation scheme, is to be reduced at an accelerated pace under the influence of European requirements. This means that on an average livestock farm, due to lack of placement of animal manure, a considerable amount of the produced manure respectively slurry, has to be removed. This entails high disposal costs on the one hand and, on the other hand, also means an additional burden of climate-related emissions such as CO₂ due to many truck movements of these manure transports. It has also emerged that the mandatory manure accounts are not always conclusive.

Moreover, when slurry is applied elsewhere, for example on an arable field, the same field emissions and odor load will occur as indicated above for emissions on the own livestock farm.

Thus, in this common pattern of a regular stable environment, significant emission sources continue to occur, emitting a cocktail of ammonia, methane, nitrous oxide, greenhouse gas, hydrogen sulfide and the like from a slurry cellar through the openings of a slatted floor up into the stable environment.

The current design of a cubicle stable with a slurry cellar has not changed substantially as a principle model of the 1960s. The initial view that this stable form would be animal-friendly and, with the advent of mechanization, fertilizers, initial European price guarantees for milk and butter and increasing knowledge, would be a good answer for the entrepreneur to maintain a livelihood with more and larger livestock and less labor, has become skewed. More industrial management, for example, increasingly necessitates a critical milk price. More and bigger no longer seems to be the answer to healthy livestock farming.

A clean and emission-controlled stable environment with emission-controlled application of metered fertilizers in the field is becoming the new standard with circular use of raw materials. A solution should be sought in more circularity and regenerative livestock farming. Regenerative stands for restoration and sustainability. More use and reuse of the natural resources that were already there but from which the sector has slowly drifted away.

### Summary of the invention

To determine the solution and solution direction for the present application, we first need to go back to the stable environment.

In a first elaboration, a closed base arrangement is provided on and over the open slatted floor, which stops the functionality of dropping manure and urine through the open slatted floor into the slurry cellar below.

This can be at least a so-called continuous base arrangement, which according to the Dutch Environment and Planning Act is a soil protection facility that can temporarily retain a substance and is defined as: "a floor, pavement or structure that temporarily retains substances and of which any interruptions or seams have been sealed".

Temporary retaining means that the base arrangement retains spills or leaks on its load-bearing surface or its load-bearing side long enough for them to be cleaned up before they can reach the non-load bearing side of the base arrangement.

The term 'load-bearing surface' or 'load-bearing side' refers to the surface or side of the base arrangement on which the livestock are walking.

A continuous base arrangement differs from an impermeable base arrangement in that the latter has to withstand a long-term load of spillage. Hence not directly related to the speed with which the spill can be cleaned up.

This eliminates the function of the slurry cellar, so that no more slurry is formed in it and the climate-related emissions from a slurry cellar also no longer occur. Any subsequent delivery of emitting substances from a former slurry cellar can also no longer enter a stable environment above it due to the continuous (stable)base arrangement.

In principle, such a continuous base arrangement is laid flat and directly over an existing slatted floor system or is laid directly as a continuous base arrangement in new buildings. Such a continuous base arrangement may consist of various materials, such as, for example, concrete, concrete with a resin-bonded top coating with an anti-slip granule layer, plastic, plastic channel board and anti-slip granule coating, a rubber floor mat with an anti-slip profile and the like.

As briefly mentioned above, the normal individual biological behavior of animals in the deposition of urine and manure implies that their deposition takes place sequentially. In other words, when urine is released from an animal, manure is not released at the same time and vice versa. More specifically, this means that due to the sequentiality and the natural ongoing movement of an animal in the living space where it is located, the physical location where the urine is deposited on a surface is, in almost all cases, a different physical location on the load-bearing surface, than where the manure is deposited, and vice versa.

Due to the relatively flat closed floor of the stable environment, the urine pool and manure mass remains more or less at the same physical deposition location where it originally ended up. However, because a relatively large number of animals walk and stand in the physical living space, on a manure passage, the likelihood of an ammonia-forming mixture forming is still high, as the deposition of one animal easily overlaps the deposition of another, starting the ammonia-forming process.

The manure and urine remaining on the closed floor of the stable environment can be removed using a manure scraper or regular manure robot as applied to open slatted floors. Because the base of the stable environment is now closed, the manure pushed away by a manure scraper or removed from the base by a regular manure robot and/or taken up will have to be collected in a discharging area of the stable environment.

As already explained above in connection with an open slatted floor, the application of a scraper and/or regular manure robot on the closed base arrangement will again leave behind a manure film that often sticks or adheres to the floor or is smeared on it, forming a virtually permanent ammonia-forming emission source over the entire surface of the manure passage.

The present invention is based on the task of reducing and, as much as possible, preventing undesired ammonia formation on an at least continuous base arrangement of a stable in a livestock farming environment.

To this end, the present invention provides a cleaning unit, a cleaning method and control and communication software for emission control in a livestock farming environment according to one or more of the enclosed claims.

In a first aspect, the invention provides a cleaning unit arranged to move independently over a load-bearing surface of an at least continuous floor of a manure passage of an arrangement for keeping stable animals, comprising a collection container and an air-flow suction arrangement having a suction mouth comprised by an airtightly sealed raised periphery with a peripheral edge delimiting a receiving opening which, during operation of the cleaning device, faces a manure film present on the load-bearing surface of a floor to be cleaned, and a suction device engaging the suction mouth, characterized by at least one air knife located in the suction mouth and connected to air compression means of the cleaning unit arranged to operatively generate in the receiving opening of the suction mouth a laminar air flow which transversely engages the manure film during operation of the cleaning unit for dislodging the manure film, wherein the suction device is arranged to suck up the dislodged manure film into the suction mouth and to transfer same via the suction device to the collection container.

With the cleaning unit according to the present invention, during operation thereof, the manure film remaining on the closed base arrangement at the load-bearing side of a floor or floor field, is dislodged from the floor by means of the laminar or uniform air flow generated by the air knife in the receiving opening of the suction mouth. The dislodged manure film is sucked up through the suction device in a continuous movement of the cleaning unit and transferred to the internal collection container, so that the load-bearing side of the floor or floor field or base arrangement, i.e. the side on which the cattle walk, is cleaned and with a clean and dry or almost dry load-bearing side as a result.

A laminar airflow is defined as an airflow in which the air moves in a straight line in parallel layers, without vortices or turbulence. This means that the air moves steadily and predictably at the same speed, without deviating in different directions.

As the laminar airflow in the receiving opening of the suction mouth engages transversely, i.e. diagonally or perpendicularly, a manure film present on the floor, this manure film is scraped or planed off the floor by the airflow, and swirled up by the confrontation of the airflow with the floor. The air flow acts like a knife or scraper moving across the floor without having mechanical contact with the surface to be cleaned. In this way, even a manure film adhering or sticking to the floor or floor field, i.e. a manure film that is smeared on the floor or floor field, will be removed effectively.

In practice, a laminar air flow with a speed in the order of 18 - 24 m/sec produced by the cleaning unit according to the present invention has been shown to effectively clean the floor of a manure passage with a manure film present thereon.

An air knife, in an embodiment of the cleaning unit according to the present invention, comprises an enclosed elongated tubular housing extending at the operative lower side of the cleaning unit over the operative width of the cleaning unit, with an elongated slit-shaped air outlet or air orifice directed towards the floor field to be cleaned during operation. Such an air knife provides a laminar airflow with relatively high blowing power, constant speed, low energy consumption and low noise levels.

It will be appreciated that a low noise level is advantageous for minimizing disturbance to animal welfare of livestock kept in a stable when using the cleaning unit according to the present invention.

By the term 'operative lower side' is meant that side of the housing of the cleaning unit which faces the floor area to be cleaned or the surface of a base arrangement to be cleaned during operation of the cleaning unit. The term 'operative width' of the cleaning unit means the width of the housing transverse to the straight through direction of travel of the cleaning unit.

The air knife is positioned within the suction mouth, i.e. within the airtightly sealed raised free peripheral edge thereof, which peripheral edge in an embodiment of the cleaning unit according to the present invention is formed by two spaced apart elongated flexible blade- or plate-shaped sliding parts extending transversely to the operative lower side across the operative width of the cleaning unit and forming a closed periphery of the suction mouth. These blade- or plate-shaped sliding parts extend beyond the housing, i.e. transverse to the operative lower side, of the cleaning unit to such an extent that they engage the base arrangement or floor field to be cleaned during operation of the cleaning unit.

That is, the blade- or plate-shaped sliding parts may both be dimensioned such that they engage or contact the manure film or the floor field in a substantially airtight manner, whereby the receiving opening of the suction mouth coincides with the manure film during operation, or such that both blade- or plate-shaped sliding parts remain at a slight distance from the manure film during operation, for example at a distance of about 0.5 to 1.5 cm, whereby during operation the receiving opening of the suction mouth is thus at a distance above and opposite to the manure film.

In a mixture, the front blade- or plate-shaped sliding part, seen in the operative direction of movement of the cleaning unit, has dimensions such that during operation, this sliding part remains at a slight distance from the manure film, for example a distance of 0.5 to 1.5 cm while the other, rear blade- or plate-shaped sliding part contacts the manure film. A receiving opening located at a distance from the manure film has the advantage that during operation of the cleaning unit, loose manure particles lying on the manure film are not collected in front of the front blade- or plate-shaped sliding part, but end up in the suction mouth and are moved to the collection container via the suction device.

In practice, it or each air knife and the suction mouth may also be spring-loaded in the direction perpendicular to the operative lower side of the cleaning unit, in order to follow a relief in the load-bearing surface of a continuous floor of a manure passage such that the air knife and/or the receiving opening of the suction mouth continuously contacts the manure film in a predetermined manner during operation of the cleaning unit.

The laminar airflow produced by the air knife, due to its relatively powerful confrontation with the floor field in the area of influence of the laminar airflow, i.e. in the suction mouth, produces a powerful vortex and dislodges the manure residues of the manure film present on the floor field and other iniquities at the floor field in a vortex of manure residues.

In an embodiment of the cleaning unit according to the present invention, the cleaning unit implemented as an independently moving unit is equipped with a combination of functionally connected and interacting components integrated into the cleaning unit, such as the suction mouth, air compression means and wherein the suction device is implemented as at least one matter-particles or solids separator for separating air and manure particles from the suctioned manure film and arranged for collecting the manure particles in the collection container as a slurry.

In an embodiment of the cleaning unit according to the present invention, the matter-particles or solids separator comprises at least one cyclone or vortex separator, having a matter inlet, a matter outlet and an air outlet, wherein the matter inlet engages the suction mouth, the matter outlet engages the collection container and the air outlet is connected to the air compression means, for providing a circular air system in this way.

The air compression means may include, for example, an air compressor or blower. A blower delivers a tuned constant volume of air per unit time. The blower finds application as a provider of a constant air volume per unit of time on the one hand, but also as a vacuum amplifier for suctioning matter on the other hand.

The air drawn in by the blower is also the air produced by the blower taking into account any resistances in this circular system. The constant output of air is delivered by the blower into the air knife.

Because the air compressor or blower is connected to the suction mouth via the at least one matter-particles or solids separator, for drawing air from the suction-mouth, a vacuum effect is created in the suction mouth during operation, generated by the air volume drawn in by the air compressor or blower, in a more or less permanent circular movement. The powerful air suction in the suction mouth continues in the at least one matter-particles separator, such as a cyclone, and leaves same after which the air suction passes an air filter and is sucked up again as input air by the air compressor or blower.

As the suction mouth engages the floor field by the blade- or plate-shape sliding parts during operation of the cleaning unit, an underpressure is created in the suction mouth which creates the aforementioned vacuum effect in the suction mouth.

Matter dislodged in the suction mouth is sucked up and transferred to the at least one matter-particles or solids separator. After passing by the cleaning unit, the floor field is then in its originally clean state again, without manure film.

In an embodiment of the cleaning unit according to the present invention, the slit-shaped opening of the air knife is angled at an obtuse angle with the operative lower side of the cleaning unit oblique to the floor field to be cleaned, such that a constant sharp powerful laminar airstream or airflow in the direction opposite to or in the operative direction of movement of the cleaning unit engages the manure film. The air knife creates a relatively wide and effective airflow that produces a pneumatic scraping effect without having mechanical contact with the surface to be cleaned.

The flexible blade- or plate-shaped sliding parts that form the suction mouth can also be located at an obtuse angle oblique to the operative lower side of the housing.

It will be appreciated that more than one air knife may be positioned in the suction mouth, for example several air knives which, in operation, engage with a floor area or base arrangement to be cleaned in different directions or at different angles.

The collaboration, in the operative movement of the cleaning unit, of the functionality of the air knife operating transversely on the floor field where it dislodges the manure film present and the simultaneous absorption by the cleaning unit of the dislodged manure film by the vacuum system, results in an optimally clean floor field.

In an embodiment of the cleaning unit according to the present invention, the suction mouth is formed by two blade- or plate-shaped sliding parts arranged parallel or nearly parallel to each other in the form of dense silicone or rubber lobes with a relatively soft shore and connected at their ends.

In an embodiment of the cleaning unit according to the present invention, the cyclone is a funnel-shaped cylindrical matter separation device which operates according to the laws of centrifugal force, separating a mixture of matter and air based on differences in mass density.

The manure film sucked up through the suction mouth is fed at high speed into the wide cylindrical upper part of the cyclone, which forms the matter inlet of the cyclone. The feed rate combined with a tangential inlet causes the introduced slurry mixture to circulate in the cyclone.

Inside the funnel-shaped cyclone, the entering mixture is automatically forced into a downward spiral outer flow and an upward spiral inner flow. The heavier particles leave the cyclone via the downward directed outer flow at the narrow lower side which forms the matter outlet and thereby enter the internal collection container of the cleaning unit in the form of so-called slurry. The lighter particles and air leave the cyclone at the top, via the air outlet.

In a further embodiment of the cleaning unit according to the present invention, plural cyclones can be connected in series or in parallel, thus further separating the exiting mass into separate mass parts. As a result, the manure film sucked-up can be further separated into liquid and solid, for example, whereby the exiting solid can be transferred to the internal collection container and the liquid can be used as an additional replenishment liquid in the dislodging area in the suction mouth, for example if the residual manure mass on the floor field would be relatively too dry.

In a further application, the chemical process underlying ammonia formation can be further reduced by acidifying the manure passage with water or cleaning liquid mixed with a peroxide or acetic acid during cyclic, fast, and clean removal of the manure mass. This is because a lower pH substantially limits the formation process of ammonia.

In an embodiment thereof, the cleaning unit according to the present invention may be provided with a separate liquid container for holding cleaning liquid and liquid potentially separated by a cyclone, if any, with a spray nozzle or spray valve or valves connected to this liquid container and located at the operative lower side of the cleaning unit for wetting the manure passage.

In a further embodiment of the cleaning unit according to the present invention, the air flow generated by the air compressor or blower may also be employed to propel the collected dislodged manure film or slurry from the internal collection container at an unloading or discharge point. For this purpose, the collection container is provided with a discharge arrangement and the air compression means are connected to the collection container for generating an overpressure in the collection container for removing matter collected therein via the discharge arrangement.

In an embodiment of the cleaning unit according to the present invention, the discharge arrangement comprises a discharge opening of the collection container located at the operative lower side of the cleaning unit that can be automatically opened and closed by means of a discharge valve. For example, the discharge opening and discharge valve may extend substantially across the entire width of the operative lower side of the cleaning unit.

It will be appreciated that the discharge arrangement may also comprise, for example, a pipe or hose connected to the collection container that extends into the housing of the cleaning unit and may be automatically connected to an unloading or discharge point via a valve or valve lock, for example via a so-called quick coupling. This may also include, for example, vacuuming the collection container at an unloading or discharge point.

By compressing the air with the air compression means, the air flow leaving the air knife is slightly heated, which has a drying effect on moisture residues on the floor, such as, for example, urine residues and/or cleaning liquid sprayed or applied on the floor.

To promote the drying effect of the airflow, the cleaning unit according to the present invention may in an embodiment of the invention be provided with an electric heating device, for heating the air supplied to an air knife.

In a still further embodiment, the cleaning unit according to the present invention comprises at the operative lower side thereof a rotating frame or platform driven cyclonal in a bowl or dish-shaped closed housing, on which one or more air knives are mounted diagonally. The bowl or dish-shaped housing extends with its raised free peripheral edge beyond the operative lower side of the cleaning device to such an extent that this peripheral edge grips the floor area or continuous base arrangement to be cleaned substantially airtight during operation of the cleaning device and thus forms the suction mouth.

The assembly then forms part of the cleaning unit operated as an independent moving unit, where the vacuum suction system consists of an air-driven cyclonic unit and, due to the rotating air knives, a vortex of the manure mass from the floor area is created and, inherently to the cyclonic action, at the same time, under the influence of the vacuum effect created, the dislodged manure mass is sucked up, resulting in a clean floor area.

The air knives may again be formed by elongated tubular housings having a slit-shaped opening for generating an air flow in the suction mouth and in a further embodiment of the cleaning unit according to the present invention provided, for example at their ends, with one or more spray or spray valves for wetting the manure passage and also cyclonal driving the rotating frame or platform on which the air knives are mounted.

In an embodiment, the cleaning unit according to the present invention is equipped at its front, viewed in the direction of travel or advancing operative direction of movement of the cleaning unit, with a shoving system extending transversely to and across the operative width of the cleaning unit for moving, collecting and discharging the bulk of the manure mass of a manure passage from the floor field into an unloading or discharge point of a stable environment. Viewed in the direction of movement of the cleaning unit, the suction mouth is thereby positioned behind the shoving system.

The shoving system may comprise, for example, a beam-shaped unit with a flexible blade- or plate-shaped shoving part of a silicone or rubber composition attached to this beam-shaped unit. In an operative state of the cleaning device, the blade- or plate-shaped shoving part engages the surface of the floor area to be cleaned, i.e. the continuous base arrangement.

In an embodiment of the cleaning unit according to the present invention, the shoving system comprises a further collection container and a further suction device connected to the further collection container, with an inlet opening connected to the further collection container, wherein the further suction device is arranged to create an underpressure in the further collection container for receiving in and retaining in the further collection container, during operation of the cleaning unit, manure mass pushed by the shoving system in front of the inlet opening, wherein the further collection container is provided with a further discharge arrangement separate from the inlet opening for discharging from the further collection container manure mass collected therein.

In this embodiment, the further collection container is arranged to receive in the cleaning unit, via the inlet opening, accumulated manure mass collected by the shoving system during its route along a manure passage, and to empty the further collection container via the further discharge arrangement, separated from the inlet opening, for example at an unloading or discharge point in a stable environment.

The further collection container is located in the cleaning unit separately from the collection container connecting to the suction mouth for receiving a dislodged manure film.

In an embodiment according to the present invention, the inlet opening is located at the operative lower side of the cleaning unit at the front side thereof. During operation of the cleaning unit, a manure mass accumulates in front of the inlet opening, which accumulation completely or partially closes off the inlet opening from the outside air. The further suction device creates an underpressure in the further collection container as a result of which it largely absorbs the accumulated manure mass during the continuous movement of the cleaning unit and retains it in the further collection container.

In an embodiment of the cleaning unit according to the present invention, on the operative lower side thereof, behind the inlet opening viewed in the advancing direction of movement or the operative direction of movement of the cleaning unit, a blade- or plate-shaped shoving part extends transversely across the operative width, with dimensions transverse to the operative lower side such that this blade- or plate-shaped shoving part scrapes across a floor to be cleaned during operation of the cleaning unit, for accumulating shoved manure.

In an embodiment of the cleaning unit according to the present invention, this blade- or plate-shaped shoving part is formed by two elongated silicone rubbers located flush with and parallel to each other in a tapered shape . This maintains, on the one hand, a sufficient scraping effect and provides sufficient resistance to the pressure of the pushed-up manure mass to prevent it from entering the rear suction mouth.

In embodiments of the cleaning unit according to the present invention, the further suction device may comprise a known air suction pump or vacuum pump or, for example, a further cyclone or vortex separator operating according to the cyclone technology described above.

For unloading manure mass collected in the further collection container, an embodiment of the cleaning unit according to the present invention provides that the air compression means are connected to the further collection container for achieving an overpressure in the further collection container for removing manure mass collected therein from the further collection container via the further discharge arrangement.

In an embodiment of the cleaning unit according to the present invention, the further discharge arrangement comprises a further discharge opening of the further collection container located at the operative lower side of the cleaning device at a distance from the inlet opening, which further discharge opening can be automatically opened and closed by means of a further discharge valve. The further discharge opening and the further discharge valve may extend substantially across the entire width of the operative lower side of the cleaning unit, for example.

It will be appreciated that the further discharge arrangement may also comprise, for example, a pipe or hose connected to the further collection container that extends into the housing of the cleaning unit and may be automatically connected to an unloading or discharge point via a valve or valve lock, for example via a so-called quick coupling. This may also include, for example, vacuuming the further collection container at an unloading or discharge point.

The cleaning unit is further equipped with a package of control and communication software arranged to control the movement and route identification of and communication with a cleaning unit by means of a plurality of known sensors mounted on the cleaning unit, such as ultrasonic sensors, infrared sensors, laser light sensors, GPS sensors, etc. The control and communication software is arranged for using these sensors to control the direction and speed of movement of the cleaning unit in a stable environment containing moving animals that constitute obstacles that must be detected for the independent movement of the cleaning unit in the stable environment.

An independently moving cleaning unit also has its own energy package in the form of one or more robust rechargeable batteries, which in a further embodiment of the cleaning unit according to the present invention can also be exchanged as cassettes. This energy package ensures the excitation of driving means of the cleaning unit, such as, for example, an electric motor drive, the energy supply for the air compressor or blower and other technical components of the cleaning unit.

For use of the cleaning unit in a livestock shed environment, an electrical charging point for charging the electrical energy package or batteries, for example a so-called fast charger, is also provided at one or more locations in or near an unloading or discharge point for the collected manure mass. The independent moveable cleaning unit starts at such an unloading and charging point and then has sufficient energy stored in a rechargeable energy package to perform pre-programmed routes.

An independently moving cleaning unit arrives at an unloading and charging point based on a certain operating time, frequency or in a certain rhythm or based on a filling level of the collection container and/or further collection container determined by load sensors or the like in the cleaning unit. Upon arrival at a recurring and mutually coordinated unique position at an unloading and charging point, the contents of the internal collection container and/or further collection container are automatically unloaded. At the unloading and charging point, the independently moveable cleaning unit connects to the energy source to provide the rechargeable energy pack with a new charge of electricity so that the independently moveable cleaning unit can start another route through the stable environment.

In the case of a cleaning unit with liquid container, an unloading and charging point may also be arranged for taking cleaning liquid into this liquid container.

For cleaning the internal collection container and/or further collection container, in an embodiment of the cleaning unit according to the present invention, one or more spray nozzles or spray valves may be arranged in the collection container and/or further collection container remote from the inlet opening and operative such that a rotating fluid jet or fluid jets are operative in the collection container and/or further collection container for the internal cleaning thereof after the manure mass and/or dislodged manure film or slurry in an unloading and charging point has been discharged therefrom. The cleaning liquid required for this purpose, such as, for example, water, may be provided by a liquid container present in the cleaning unit or, for example, by a liquid container or liquid connection in an unloading and charging point.

The emphasis of the cleaning unit according to the present invention lies in the post-cleaning and absorption of the residues of the floor field without external water but with the help of controlled air, whereby the surface of the floor field is cleaned to its originally clean state.

As described above, shoveling away the manure mass is still relatively most efficient when the solid manure is mixed with urine. Should less urine or liquid be present during the shoveling, the shoveling movement smears the relatively drier solid manure into a relatively thick smear layer as a substantial manure film on the floor field, which, however, can be effectively removed from the floor through the laminar air flow by the cleaning device according to the present invention.

The cleaning unit according to the present invention, for use in a stable environment equipped with one or more unloading and charging points for discharging manure collected by a cleaning unit, in an embodiment thereof, is particularly arranged for unloading collected manure in an inclined position of the cleaning unit wherein the control and communication software is arranged for moving the cleaning unit to a unloading and charging point for automatically unloading collected manure mass and/or dislodged manure film or slurry and charging the batteries, in particular wherein a unloading and charging point is provided with a cleaning mechanism for cleaning a cleaning unit, and wherein the control and communication software is arranged for activating the cleaning mechanism.

In the inclined position, the cleaning unit is positioned at its rear side and/or front side, viewed in the operative direction of movement or direction of advancement of the cleaning unit, higher with respect to the floor than at its front side and/or rear side, respectively, so that, under the influence of gravity, the collection container and/or further collection container can be easily emptied through the discharge opening and/or further discharge opening, respectively.

The inclined position may be achieved mechanically, for example by means of a lifting mechanism automatically operated by the control and communication software at an unloading and charging point and/or by constructional features, such as, for example, a ramp at an unloading and charging point.

In an embodiment of the cleaning unit according to the present invention, an unloading and charging point in or near the stable environment is provided with a cleaning mechanism comprising a washing lane adapted to the independently moveable cleaning unit in the form of a brush cleaning system with water sprayers. Each independently moveable cleaning unit wishing to unload at an unloading and charging point does so in a pre-set manner such that the independently moveable cleaning unit passes through the washing lane to reach the unloading and charging point, and is brushed and sprayed with water in this continuing movement which returns the independently moveable cleaning unit to relative cleanliness and keeps the sensors and signaling devices free of manure and other impurities.

The combined unloading, charging, and cleaning time for each independently moveable cleaning unit is preferably about half an hour, but may deviate from this.

In a second aspect, the present invention provides a method of removing a manure film on a load-bearing surface of an at least continuous floor of a manure passage of an arrangement for keeping stable animals which method comprises:
- independently moving one or more cleaning units arranged for removing the manure film over the load-bearing surface of the at least continuous floor of a manure passage;
- transversely engaging the manure film by at least one laminar air stream produced by an air knife of one or more cleaning units during movement thereof, wherein dislodged manure film by the at least one laminar air stream is collected by the at least one or more cleaning units, and
- independently moving the one or more cleaning units to an unloading or discharge point of the arrangement for keeping stable animals and automatically unloading collected manure film in this unloading or discharge point.

The independently moveable cleaning unit according to the present invention may be provided with computer-controlled control and communication equipment, with control and communication software operating on the basis of programmed routes and functionality for moving the cleaning unit independently over an at least continuous base arrangement of a stable environment, whereby at the same time as the manure mass in the manure passage may be shoveled away, if the cleaning unit is provided with a shoving system, the manure passage is post-cleaned under the action of the air knife.

A slurry cellar can then be completely removed from its function and cleaned. Construction-wise, this space can otherwise remain. The term manure mass is used here to refer to the collected solid manure and urine as a mass product.

The term independently moveable cleaning unit is chosen to indicate the, compared to regular manure robots, multiple functionality. For example, the independently moveable cleaning unit equipped with a shoving system can perform a similar function to a regular manure robot that shoves or temporarily collects the manure mass from a floor field in the ongoing movement of a route through a stable environment until it reaches an unloading point. In contrast, the independently moving cleaning unit according to the present invention also performs a distinct post-cleaning step in the manure passage in the same forward motion that results in the continuous base arrangement being in its originally clean state again and post-cleaned

Since the deposition of urine and manure in the manure passage continues almost constantly and, consequently, the resulting emission development, the frequency and intensity of the deployment of an independently moveable cleaning unit according to the present application are tuned in such a way that a relatively constant and optimal emission-limiting status of a livestock shed environment is obtained.

This is based on the insight that an undesirable emission-forming ammonia reaction can be prevented or greatly reduced by controlling the time span required by solid manure and urine to achieve ammonia formation. That is, by greatly reducing the reaction time of urease and urea by removing the manure mass in a frequent repetition, quickly and cleanly from the closed stable floor to the outside of the stable environment, the ammonia-forming method can thus be interrupted and controlled early.

The frequency at which an independently moveable cleaning unit in a livestock shed environment post-cleans the floor field is preferably, but not exhaustively, every hour or less than an hour. Thereby, an important part of that hour is the active operating period, during which an independently moving cleaning unit moves through a livestock shed environment.

By actively deploying several independently moving cleaning units in a livestock shed environment, due to communication between them and coordination, an operative cleaning route will be performed almost constantly by the then operative cleaning facilities present in the livestock house.

Any urease-urea reactions are then very limited or even eliminated in the reaction time due to the frequent and cyclic deployment of an independently moveable cleaning unit because the solid manure and urine dropped from the animal is already absorbed before a substantial ammonia reaction has been able to take place.

The control and communication software may further be arranged to be 'smart' such that the movement of multiple cleaning units over a continuous base arrangement can be mutually coordinated. For example, a combination of several independently moving cleaning units according to the present invention with and without a shoving system and/or one or more regular manure robots and one or more cleaning units according to the invention with and without a shoving system for post-cleaning of the base arrangement.

More specifically, this means that the software that controls an independently moveable cleaning unit to perform a certain cleaning route and frequency in a livestock shed environment is programmed such that it recognizes multiple independently moving cleaning units in the livestock shed environment and vice versa, so that duplicate routes, overlaps, or collisions, or dwell times in unloading-charging stations do not duplicate or confront.

The advantage of this is that unnecessary overlapping of routes can be avoided and only one independently moveable cleaning unit is always present in an unloading and charging station. Also, in the event of any breakdown of an independently moveable cleaning unit, another independently moveable cleaning unit can take over the necessary succeeding route or, for example, adjust the overall stable route in driving pattern and relative speed. This smart software is also part of the present application.

In the present application, this smart software leads to optimal utilization of the independently moveable cleaning units. An optimal utilization of independently moveable cleaning units in a livestock house environment implies a certain excess capacity of independently moveable cleaning units.

This relative overcapacity provides that in the event of failure of a particular independently moveable cleaning unit, there is still sufficient capacity left to cover the period of recovery from failure by another available independently moveable cleaning unit or units, so that the contamination level and therefore the emission formation of a livestock shed remains manageable.

The use of an independently moveable cleaning unit according to the present invention is aimed at extremely shortening the time required to form ammonia from the combination of urease and urea in a manure mass. To this end, the independently moveable cleaning unit according to the present invention can travel such routes through a stable environment and at such a frequency that the manure mass is cyclically removed from the floor field. In a specific post-cleaning of the independently moveable cleaning unit, the floor field behind the independently moveable cleaning unit is post-cleaned and cleaned in its original state.

The formation of more climate-related emissions such as, inter alia methane, nitrous oxide, carbon dioxide, ammonia and hydrogen sulfide is also limited or levelled, as the slurry mass is no longer stored in a slurry cellar where it can then react continuously, but via the unloading or discharge point by an independently moveable cleaning unit hourly fresh outside the stable environment in a closed unit is processed into a zero-emission fertilizer product that, as 'Recovered Nitrogen from Manure', the European term is RENURE, can be used entirely on the own farm and further necessary removal of manure from the farm, as a result of the further reduction of derogation, is no longer necessary.

The collected manure is further processed into a zero-emission fertilizer in a closed environment, day or hourly fresh outside the livestock shed. Several forms of manure upgrading outside the stable are operative in practice, which either alone or in combination can provide a beneficial outcome to emission control on a livestock farm.

Manure upgrading leads to the generation of manure components that are basically excellent as fertilizer and also do not lead to emission development after these upgraded fertilizers have been or are applied in the field or a pasture. Therefore, no odor load can be observed in the field because the upgraded fertilizers have ceased to develop the characteristic bacterial conversion and associated odor load.

Also, the adverse nitrification of groundwater that is highly prevalent when slurry is applied is also largely curtailed as the upgraded fertilizers, in terms of their nature and composition, form a better bond with the humus complex of the soil and can therefore become more gradually available during the growing season of the field crop and the growth phase and nutrient requirements that the crop develops in that process.

Manure valorization outside the stable, for example, can also be achieved by a mono-manure digester because, in particular, day-fresh manure passed through a mono-manure digester generates a substantial methane output. This methane can be converted into electricity or supplemented to the natural gas grid and as such generate value. For example, a mono-manure digester extracts 35 m³ of methane gas from about 1 m³ hour-fresh manure. The residual product of the digestion method, called digestate, can then be further digested by, for example, electrodialysis or by distillation or denitrification processes, among others.

Fresh manure can equally be employed in another upgrading application such as electrodialysis or a distillation process such as a Zero Liquid Discharge with mechanical vapor recompression as a relatively energy-efficient processing.

In an electrodialysis application, using membrane technology, minerals are extracted from the main liquid and stored separately as a mineral concentrate.

In distillation, the mass is evaporated and the minerals remain available in the dry fractions. The ammonia from the urine or liquid fraction or from the digestate can be bound with, for example, sulfuric acid or nitric acid to a normal fertilizer, in dry crystalline form, such as ammonium sulfate or ammonium nitrate. These minerals can be reapplied emission-free in the field by using precision fertilization with relatively light machinery so that the right amount of fertilizer can be applied, in the right place and at the right time. The remaining water from this process is a form of distilled water and no longer contains minerals and can further be used freely in the field, discharged or applied as rinse water in the stable environment.

In a further elaboration, until the manure mass is taken to outside the cattle shed environment, (hydro)cloning can energetically separate it into a relatively solid fraction and air fraction and with a further separation into a solid fraction and a liquid fraction. A (hydro)cyclone can effectively separate cattle slurry or slurry into solid and liquid fractions with particle sizes of about 10 to 50 microns. By passing the liquid fraction through an acid bath of sulfuric acid or nitric acid in a further operation, the volatile ammonia in the liquid is bound to ammonium sulfate and ammonium nitrate, respectively. Both have similar properties to common fertilizers. The liquids of ammonium sulfate and ammonium nitrate, respectively, can be applied in the field with precision fertilization with favorable effects with regard to binding in the arable soil and availability during the growing season for the existing crop. What remains is low-mineral water that can be freely applied again in the field or on the farm.

Increasing the organic matter content in the field promotes soil life, the right ratio of carbon-nitrogen, the binding of minerals, the right ratio of fungi-bacteria, the protective capacity against plant diseases, the water-binding capacity of the arable soil and the structure of that arable soil. Soil organic matter binds the minerals applied with precision fertilization, preventing leaching and excess nitrate formation. This promotes groundwater quality. The bound minerals are released during the growing season according to their nature and composition based on the root growth and mineral requirements of the crop.

By consistently taking the manure clean from the source almost immediately and with optimum frequency, and keeping the floor field cyclically clean as well, urease-urea reaction can hardly occur in the stable. The reaction time is lacking for it. Since there is also no slurry cellar, these emissions are no longer present. In this way, the emission development in a stable environment is asymptotically reduced to zero.

Manure upgrading of the livestock farm's own manure creates fertilizer substitutes and the upgraded manure types can be applied in the field virtually emission-free. Unnecessary nitrification and leaching to groundwater is severely limited by the binding capacity of the arable soil of the applied minerals. This also greatly reduces the odor load in the field. In the field, emission development is therefore also asymptotically reduced to zero.

The obligation to dispose of an excess mass of slurry, which is associated with high costs and CO₂ emissions due to the many truck movements, can thus be completely eliminated and the business case for a livestock farmer is extremely favorable.

It also eliminates the need to buy fertilizer, which not only saves the farmer the purchase cost, but also makes a major climate-related contribution to no longer depleting potassium and phosphate mines, as well as counteracting the large CO₂ production and energy consumption of fertilizer manufacture. The production and transportation of minerals such as potash and phosphates from the respective mines would also become completely unnecessary.

Binding minerals from the soil's own fertilizers in the soil complex is encouraged by omitting artificial fertilizers, allowing the critical mass and balance of important fungi and bacteria in the soil to be restored and the soil's own regenerative capacity to function again. The application of organic matter from just the solid manure fractions in the soil, enhances that process which also allows the micro soil life to recover from years of one-sided fertilizer use. The soil complex will then start binding minerals, preventing leaching to groundwater. Bound minerals present in the soil complex will be released according to crop needs during the growing season of the crop. There will also be a favorable protein build-up and increased yield of a field crop, with the resistant protein build-up in the crop in turn leading to a favorable feed conversion in the stable and a lower urea number in the milk which in turn leads to a lower nitrogen level in the manure.

The Dutch Water Framework Directive and the Nitrates Directive set requirements for the quality of ground and surface water. For agriculture, there are emphases on reducing and controlling, for example, nitrification of groundwater through leaching of fertilizers due to the application of artificial fertilizers and slurry, and reducing leached insecticides.

As briefly described above, a continuous base arrangement or floor field can be constructed from several possible materials, depending partly on the local conditions and requirements in a livestock farm.

For example, concrete with a special inert top layer with an anti-slip agent can be chosen, or asphalt, also with an anti-slip top layer, or a more plastic-related product such as a plastic hollow-core sheet with a top coating and anti-slip layer or a rubber mat or floor arrangement with a particular profiling or base arrangement.

When implemented in a livestock shed environment, the materials all meet the dynamic, static and chemical loads of a livestock shed for a long period of time and are safe for cattle to walk on.

The application of a rubber mat or floor arrangement in a livestock shed environment is well known in itself. There have been many applications and developments that result in a rubber mat in a livestock shed environment primarily leading to an increase in walking comfort for the animals. Rubber is somewhat flexible so that the hoofprint slightly compresses the rubber during a walk, making the walking behavior close to that experienced by an animal when walking outside in the pasture. For better slip resistance, rubber floors are provided with corundum for extra grip while maintaining good cleanability by an independently moveable cleaning unit.

The anatomy of a cattle hoof provides more comfort on the relatively soft floor because the longer outer claw can slightly depress the rubber mat, resulting in optimal pressure distribution and better step security. As a result, the soft floor prevents possible pressure damage and laminitis. The fact that with the cleaning unit according to the present invention a dry or almost dry cleaning of the floor is achieved not only has a demonstrably positive effect on claw health, but also on estrous behavior, feed intake and thus good feed conversion and metabolism of the animals. For example, a dairy cow's mobility is directly related to her welfare, but also to her economic efficiency. In this way, an almost permanently clean and dry state of the floor field in a manure passage further contributes to claw health and animal welfare.

An overly hard ground surface, without additional provisions, can lead to hoof wear, especially in the ball area, causing the hoof to tip backwards. This results in an overly flat hoof angle with poor positioning and improper loading. The top layer of a rubber mat is provided with an abrasive corundum, for example. As a result, the rubber mat behaves like a clean walking mat that offers a combination of anatomically adapted softness, high slip resistance and correct hoof wear. This means that hoof trimming is used for real care, rather than correcting mispositioning and improper loading.

A healthy, intact skin in the hoof area provides crucial protection against infectious hoof diseases such as certain skin disorders and bursitis. It is therefore necessary to keep the walking areas - and thus the hooves - as dry and clean as possible. The disclosed independently moveable cleaning unit contributes to this to the maximum extent.

A choice of a concrete floor places different emphases, although there are some overlaps. The present application preferably provides for a dedicated concrete floor as a pavement and a continuous base arrangement. This should then meet the highest standard of wear resistance, crack resistance, resistance to impact, to chemical and aggressive influences, to temperature shock and further possess a special anti-skid top layer. This top layer or top coating is a highly adhesive synthetic resin-bonded coating in which, on the one hand, the anti-slip profile is tailored to the use by cattle and, on the other hand, the top coating is inert and flat-sealed so that cleanability remains optimal through the independently moveable cleaning unit and urease cannot penetrate the micro pores of the floor.

The floor and top coating also has the property that it can be applied relatively thinly in a short turnaround time. It has an increased moisture tolerance, low VOC emissions, processability at low temperature, electrically conductive and the floor meets the required fire and smoke classes. For use in the present application, good cleanability in relation to ease of walking by cattle is of great importance.

More specifically, the continuous base arrangement consists of a concrete with polymer-modified hydrophilic binders combined with an inert aggregate matrix and shrinkage compensating admixtures.

The overlay of an existing, cleaned slatted floor by means of a continuous base arrangement is constructed in two parts. The part that is directly applied to the existing slatted floor is a floating floor-overlay. The term "floating" is used here to describe the technical term whereby the overlaying floor section is not bonded to the open slatted floor below. A dense, wear-resistant floor is laid over this floating floor, the thickness of the composition of which is preferably but not exhaustively approx. 3 to 8 centimeters.

The finishing layer of the continuous base arrangement consists of two separate layers. The first layer consists of resin-bonded binders filled with inert aggregates. In the wet first layer, an inert anti-slip agent is applied with a preferred but not limitative nominal grain size of about 8 mm with a Mohs hardness of about 8.5. After sufficient curing, the second finish coat is applied at an appropriate thickness based on workmanship to achieve the desired degree of anti-slip.

The grain size, the distribution per unit area combined with the layer thickness of both finishes determine the degree of grip and cleanability. A type of binder based on Xolutec^{™} technology is preferred but not exhaustive. These binders have some favorable properties and combine very good adhesion, moisture tolerance, reactivity, chemical resistance, and abrasion resistance. This floor type has low free shrinkage with a maximum crack width of about 0.1 mm. The compressive strength is > 15 N/mm², after 12 hours. After 28 days, the compressive strength is > 40 N/mm².

The deployment of an independently moveable cleaning unit, according to the present application, does not change with a particular material choice of a continuous base arrangement. Each top layer is of such composition that the independently moveable cleaning unit can clean the floor area to its originally clean state.

Another aspect of the present application concerns the insight to round off or provide the present mostly rectangular bends, stall ends, intermediate paths and transitions of the livestock walking area with a rounded bend design with a non-restrictive radius of, for example, approx. 1500 mm, for the purpose of smooth progress and effective functionality of the independently moving cleaning unit through those bends or transitions. This greatly increases the effective operation, cleaning and working speed of the deployed facilities.

The stall ends and rectangular and raised transitions between the manure passages, cubicles or walking areas that are usually implemented as rectangular in a regular livestock shed environment are preferably implemented in round or rounded transitions as much as possible in the present application. This is highly distinctive in the present application because in a common or regular livestock shed environment, a regular manure robot loses about 50% of useful cleaning time when turning at corners and stall ends and continuing its route. Besides the non-optimal or effective cleaning pattern of a conventional manure robot (or ditto manure scraper), a regular manure robot also loses a lot of manure mass in the overhangs at stale ends or corners. This remaining manure mass is then an extremely active source of emissions that remains in place.

An independently moveable cleaning unit according to the present invention moves at a certain speed via programmed routes through a stable environment and also, due to the rounded stall ends, corners and transitions, does not experience stagnation in its progress but can continue in a uniform movement. In this way, it is also conducive to the cleanability of oblique corners or stall areas that otherwise in a rectangular shape are not or poorly accessible for proper cleaning and would therefore continue to provide emissions.

In a third aspect, the cleaning unit according to the present invention comprises the control and communication software provided as a separate computer program product for use of the cleaning unit in an arrangement for keeping stable animals for cleaning a stable base arrangement using one or more cleaning units.

The present application focuses primarily on structural emission reductions in the immediate stable environment. The effects of this invention also make important contributions to more climate-related emission reductions and savings in the field and in the livestock farm supply chain and appeal to the conservation and circularity of minerals across the livestock sector. The various arrangements and measures of the present application, in conjunction with each other, achieve a maximum emission reduction in the entire stable environment, whereby through the construction and application of the cleaning device according to the present invention, the emission-producing aspects in a stable environment are frequently or permanently levelled or asymptotically reduced so that no more substantial emission can be formed.

These and other aspects of the present invention are further illustrated in detail with refence to the figures of the accompanying drawings.

### Brief description of the figures

Figure 1 shows schematically, not to scale, a top view of an embodiment of a cubicle stable for keeping stable animals, in an embodiment with a flat continuous base arrangement and cleaning units moving thereon according to the present invention.
Figure 2 shows schematically, perspective, in partially broken away form, a view of a continuous base arrangement applied over an existing slatted floor above a slurry cellar according to the present invention.
Figure 3a shows schematically, not to scale, a bottom view of an embodiment of an independently moveable cleaning unit provided with a manure scraper and air knife according to the present invention.
Figure 3b shows schematically, not to scale, a cross-sectional view of the cleaning unit along line Illb - Illb in Figure 3a showing various details and functions.
Figure 3c shows a detail of the cleaning unit in the square frame indicated by a dot-dash line in Figure 3b.
Figure 4 shows schematically, not to scale, a bottom view of a further embodiment of an independently moveable cleaning unit equipped with a manure scraper and cyclonic rotating air knife according to the present invention.
Figure 5a shows schematically, not to scale, a bottom view of a yet further embodiment of an independently moveable cleaning unit provided with a manure scraper and air knife according to the present invention.
Figure 5b shows schematically, not to scale, the yet further embodiment of the cleaning unit, partly in elevation and partly in section, along the line Vb - Vb in Figure 5a with various details and functions.

### Detailed description of the figures

The figures shown in the drawing are example figures, equal parts, or components with the same or corresponding function are indicated with equal reference figures, and features and means of the various shown and described embodiments may be combined or interchanged with each other. The invention is not limited to the shown and described embodiments.

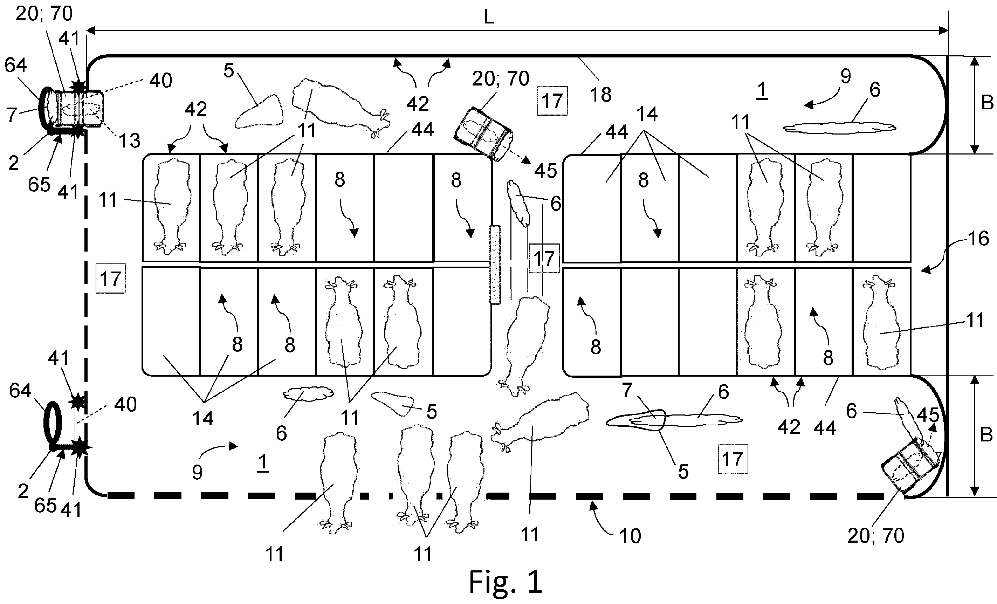

Figure 1 shows schematically, not to scale, a top view of a stable environment 18 with a so-called cubicle stable 16 having elongated manure passages 9 on a continuous base arrangement 1 for keeping stable animals or livestock 11, such as cows, pigs, goats, sheep, etc. The continuous base arrangement 1 is located in the walking section or manure passage 9 of the cubicle stable 16, where, in the embodiment shown herein, so-called cubicle lanes 14 are formed on the long side L of the manure passage 9, each consisting of a number of adjacent cubicles 8.

The continuous base arrangement 1 and/or the manure passages 9 further have an effective width B.

The cubicles 8 are constructed so that stable animals 11 can stay therein lying down, resting on, for example, a rubber waterbed or soft cubicle padding. Feed and water are generally offered on the outside of the manure passage 9 and parallel to it by means of a so-called feed fence 10 as in the shown embodiment. To take in feed, the stable animals will leave the cubicles 8 and walk via the manure passage 9 to such a feed fence 10.

In the embodiment shown, the manure passage 9 is provided with a flush laid continuous base arrangement 1 for example in the form of a rubber mat 17.

On the continuous base arrangement 1, urine 5 and manure 6 are deposited on the manure passage 9 by the stable animals 11 in a biological manner that mixes in mixed form as manure mass 7.

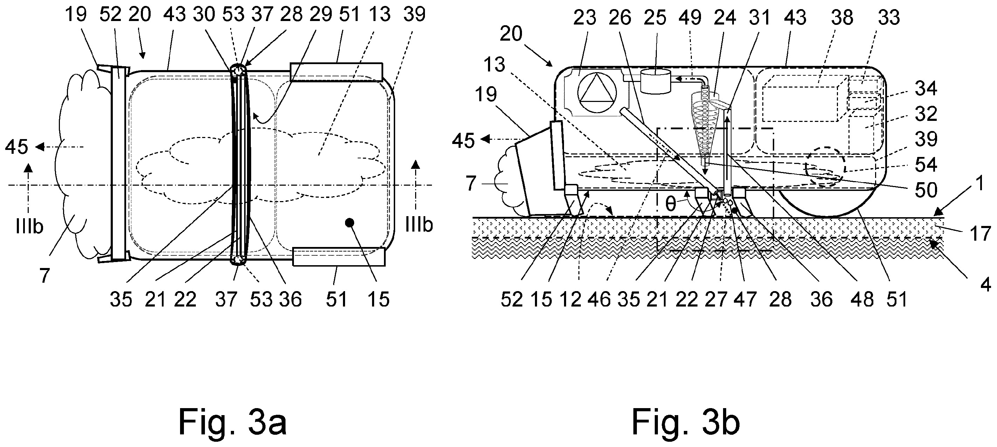

In the stable environment 18, one or more independently moving cleaning units 20; 70 according to the invention, equipped with a shoving system, move along a manure passage 9 in the direction indicated by a dash-dot arrow 45. Figures 3a, 3b, 3c, 4, 5a and 5b illustrate in more detail embodiments of such an independently moving cleaning unit 20, 70.

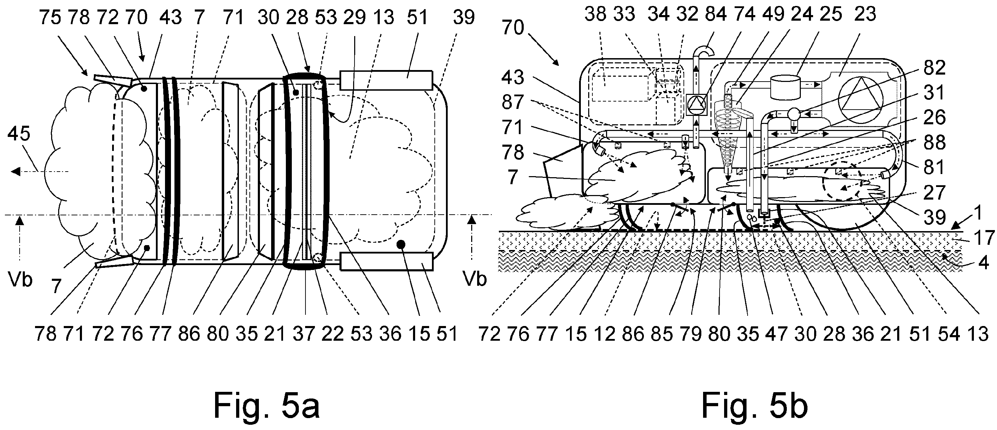

One or more unloading and charging points 2 are arranged in the stable environment 18. In more detail, such an unloading and charging point 2 comprises an unloading or discharge point 64 in the form of a siphon or similar conduit sealable from the outside air so that the manure mass 7 shoveled together or delivered therein by an independently moveable cleaning unit 20; 70 and/or dislodged manure film or slurry 13 taken up by the cleaning unit (see also Figures 3a, 3b, 5a and 5b), upon unloading, enters a containment closed to the outside air and can be disposed of up to outside the stable environment 18.

Each unloading and charging point 2 is provided with an electrical connection 65 so that an independently moveable cleaning unit 20; 70 moving into an unloading and charging point 2 makes a direct electrical connection to the electrical connection 65 of the unloading and charging point 2 so that a rechargeable power pack 38 of the cleaning unit 20; 70, in the form of one or more batteries, see Figures 3b and 5b, can be electrically charged. The electrical connection may be achieved via an electrical bus-plug connection or also wirelessly, to which the cleaning unit 20; 70 may be equipped in a manner known in itself in practice (not shown).

Each unloading and charging point 2 is further provided with a cleaning mechanism with a spray/flush system 40 and horizontal and vertical moving brushes 41. The cleaning mechanism cleans the independently moving cleaning unit 20; 70 each time it enters the unloading and charging point 2. In this method, the cleaning unit 20; 70 is sprayed or brushed clean on the outside or undergoes both operations. The great advantage of this is that a repeatedly clean operating cleaning unit 20; 70 with a high emphasis on clean sensor positions is provided, allowing it to operate virtually trouble-free.

Furthermore, an unloading and charging point 2 may be provided with a device for filling a liquid container of the cleaning unit 20; 70 with cleaning liquid if necessary (not shown).

For unloading of manure film or slurry 13 taken up by the cleaning unit 20; 70 into an internal collection container, a separate unloading or discharge point may optionally be provided at the unloading and charging point 2 (not shown).

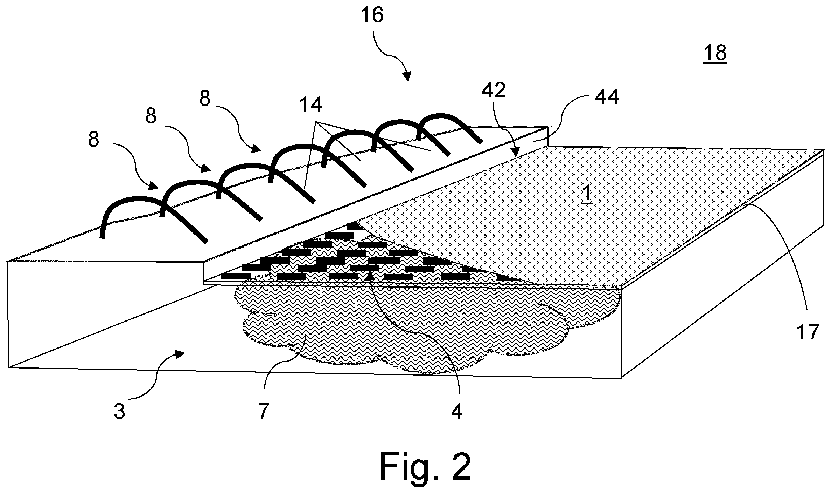

The continuous base arrangement 1 is attached to the building parts 44 along its length L and width B with a resistant joint compound 42 (see Figure 2).

Figure 2 shows schematically, not to scale, a perspective view of a cubicle stable 16 with a slurry cellar 3 containing a manure mass 7 and above it a schematic representation of an open slatted floor 4, shown partially cut away. The open slatted floor 4 is overlaid with a continuous base arrangement 1 where the position of the continuous base arrangement 1 in the form of, for example, a rubber mat 17 in relation to the cubicles 8 in a cubicle stable 16 is further schematically shown.

The continuous base arrangement 1 in the form of, for example, a rubber mat 17 is connected to the surrounding building parts 42 such as, for example, a raised edge of the cubicle lanes 14 by a resistant joint compound 42. The continuous base arrangement 1 may consist of different materials whereby, not exhaustively in the schematic example, a rubber mat 17 is elaborated. The rubber mat 17 completely seals the slurry cellar 3 located thereunder from the stable environment 18 to the outside air.

It will be appreciated that the continuous base arrangement 1 of a manure passage 9 may also be composed of other materials known in itself in practice, such as asphalt concrete, cement concrete, metal, plastic, and the like, as already described above. Any chosen material should in itself form a continuous base arrangement 1 and similarly completely seal off the slurry cellar 3 underneath it from the stable environment 18.

The operative surface area of the continuous base arrangement 1 is defined as the surface area having the size of L x B (Figure 1) on which, during normal use, manure 6 and urine 5 are dropped in a biological way by the stable animals 11. That is, the part of the manure passage 9 where the stable animals 11 habitually deposit manure 6 and urine 5.

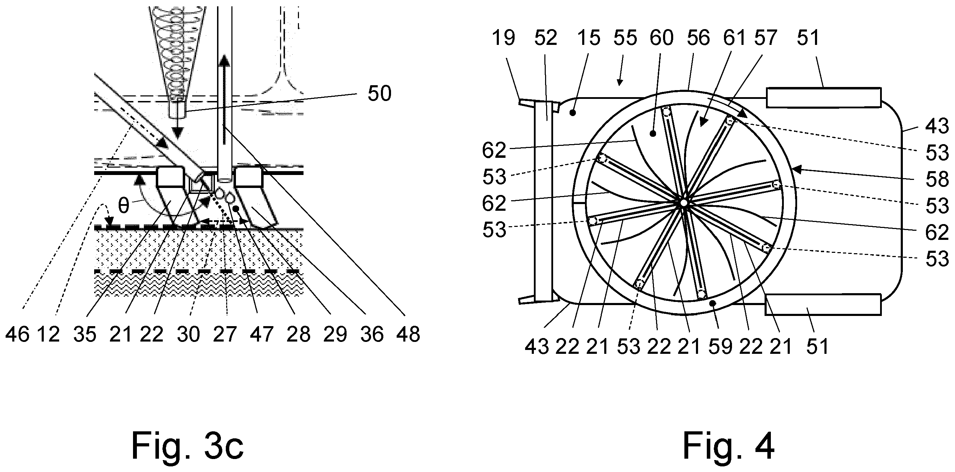

Figures 3a, 3b and 3c show schematically, not to scale, an embodiment of a cleaning unit 20 implemented as an independently moveable unit. Figure 3a shows the cleaning unit 20 seen on the operative lower side 15 thereof and Figure 3b shows the cleaning unit 20 in an operative condition thereof placed on a continuous base arrangement 1.

An independently moveable cleaning unit 20 according to figures 3a, 3b and 3c comprises a metal or plastic housing 43 equipped with sensors and communication computer equipment 32 required for automatic control, intelligent communication software 34 and control computer equipment and control software 33 for, inter alia, controlling an electric motor 54 driving wheels 51 of the cleaning unit 20 to enable the independent, automatic movement and control of the cleaning unit 20.

The control software 33 and communication software 34 may be operated by the same computer in the cleaning unit 20, for allowing a cleaning unit 20 to independently traverse a pre-programmed route or routes along a manure passage, if desired in communication with multiple cleaning units 20 moving along a manure passage, as well as for, for example, activating the cleaning mechanism of an unloading and charging point 2, as discussed above.

In the embodiment shown, the metal or plastic housing 43 includes a collection container 39 for collecting therein a manure film 12 removed by the cleaning unit 20 on the floor or base arrangement 1 of a manure passage 9 and a shoving system in the form of a manure scraper 19 located on the operative lower side 15 of the cleaning unit 20 for advancing manure mass 7 of a manure passage 9 in front of it during the continuing movement 45 of the cleaning unit 20. The shoving system may comprise, for example, a beam-shaped unit with a blade- or plate-shaped shoving part 52 of a silicone or rubber composition attached to this beam-shaped unit. This blade- or plate-shaped shoving part 52 extends so far and transversely to the operative lower side 15 of the cleaning unit 20 such that, in the operative state of the cleaning unit 20, the blade- or plate-shaped shoving part 52 engages the surface of the floor field to be cleaned, i.e. the continuous base arrangement 1, as shown in Figure 3b.

This manure scraper 19 is optional and may optionally be attached to the cleaning unit 20.

On the operative lower side 15 of the cleaning unit 20, a suction arrangement extending transversely across the operative width of the cleaning unit 20 comprising an elongated suction mouth 28 into which an elongated air knife 21 is placed, in the form of an elongated tubular sleeve extending across the operative width of the cleaning unit 20 with a narrow slit-shaped opening 22. This air knife 21 is directed towards the continuous base arrangement 1 when the cleaning unit 20 is in its operative state, as shown in Figures 3b and 3c.

The air volume and velocity of the air flow of the air knife 21 is supplied, as indicated by a dashed-dotted line arrow 46, by an air compression means such as an air compressor or blower 23 connected to the air knife 21 via an air line 26. The air compressor or blower 23 is supplied with electrical energy by the rechargeable power pack 38.

The air compressor or blower 23 generates an elongated, blade-shaped, constant laminar air flow 27 through the adjusted slit-shaped opening 22 of the air knife 21, which in the embodiment shown is directed at an obtuse angle θ to the operative lower side 15 of the housing 43 onto the continuous base arrangement 1.

The suction mouth 28 is composed of a flexible front blade- or plate-shaped sliding part 35 transversely raised with the operative lower side 15 of the housing 43, and a parallel to it spaced apart transversely raised rear blade- or plate-shaped sliding part 36, which blade- or plate-shaped sliding parts are connected at their ends 37 and form an airtightly closed upright perimeter with a free peripheral edge 29 delimiting a receiving opening 30, as schematically indicated by a dashed double arrow in Figures 3b and 3c.

In the embodiment shown, the suction mouth 28 extends transversely to the operative lower side 15 of the housing 43 to such an extent that in operation it engages airtight or virtually airtight on the floor or base arrangement 1 of a manure passage 9. Thereby, the receiving opening 30 is opposite and engages a manure film 12 to be removed on the floor or base arrangement 1.

As clearly illustrated in Figure 3c, the air knife 21 is arranged such that the laminar airflow 27 generated thereby in the suction mouth 28 engages obliquely, transversely with a manure film 12 present on the floor 1 in the receiving opening 30. As a result, this manure film 12 is, during a continuing movement of the cleaning unit 20, scraped or planed, as it were, off the floor by the airflow 27. Here, the air flow behaves like a knife or scraper moving across the floor 1 and manure film 12 without having mechanical contact with the surface to be cleaned.

The laminar airflow 27 from the air knife 21 dislodges the manure film 12 away from the continuous base arrangement 1, and the confrontation of the airflow 27 with the floor 12 creates a vortex of dislodged loosened manure film particles 47 in the suction mouth 28. In the continuing movement 45 of the independently moveable cleaning unit 20, this is a constant process.

Connected to the suction mouth 28 of the suction arrangement, in the illustrated embodiment, is a suction device in the form of a matter-particles or solids separator 24, for separating solid manure particles from the received manure film 47 and arranged for collecting the solid manure particles in the collection container 39 as slurry 13. In the embodiment shown is the matter-particles or solids separator 24 a funnel-shaped cyclone or vortex separator, with a matter inlet located on the wide circumferential side thereof, a matter outlet on the tapered lower side and an air outlet on the upper side of the funnel shape.

The matter inlet engages the suction mouth 28 via a fluid flow channel 31, the matter outlet terminates in the collection container 39 and the air outlet is connected to the air compression means or blower 23, optionally via an intermediate air filter 25, for thus forming a circular air system.

The fixed air output produced by the blower 23 is supplemented and sucked in from the air filter 25, which is in turn fed by the cyclone 24 to which the fluid flow channel 31 is connected and further vacuum connected to the suction mouth 28. The suction force generated by the blower 23 in the suction mouth 28 and in the fluid flow channel 31 is also the force needed in the cyclone 24 to obtain the required downward and upward vortices.

By forcefully supplying dislodged manure film 47 under vacuum in the cyclone 24, from the suction mouth 28 through the fluid flow channel 31 as indicated by arrow 48, a centrifugal force is generated in the cyclone 24, producing a separation of substances in the cyclone 24. Thus, dislodged manure film 47 is swirled as slurry 13 towards the outer side of the cyclone 24 and is pushed downward by the specific tapered shape of the cyclone 24 and discharged 50 into the internal collection container 39. Under the influence of this downward swirl, an upward air vortex is created in the center of the cyclone 24, causing the air to be released from the cyclone 24 at the top and sucked back in under the suction vacuum of the blower 23 through the air filter 25, as indicated by the dashed-dotted curved line arrow 49. The temporarily collected slurry 13 in the internal collection container 39 is discharged again at an unloading or discharge point 64 (see Figure 1).

Temporary in this context means the period during which the independently moveable cleaning unit 20 left the unloading and charging point 2 (see Figure 1) for a planned cleaning route across the manure passage 9 and returns at the unloading or discharge point 64 where the accumulated manure mass 7 and the dislodged manure film 47 or slurry 13 are discharged from the internal collection container 39.

For unloading the accumulated manure film 47 or slurry 13, the cleaning unit 20 may be provided with a discharge arrangement, such as, for example, a discharge opening 79 located on the operative lower side 15 and to be automatically opened and closed by a valve 80 or the like, as shown in the embodiment according to Figures 5a and 5b. Or, for example, a pipe or hose connected to the collection container 39 that extends into a wall of the housing 43 of the cleaning unit 20 and can be automatically coupled via a valve or valve lock with an unloading and charging point 2 of a stable environment 18, for example via a so-called quick coupling (not shown).

In the embodiment shown in Figures 3a and 3b, the front blade- or plate-shaped sliding part 35 and the rear blade- or plate-shaped sliding part 36 are made of a flexible material such as rubber, silicone, or, for example, a flexible plastic material.

Furthermore, in the embodiment shown, the front blade- or plate-shaped sliding part 35 and the rear blade- or plate-shaped sliding part 36 are oriented at the same angle to the operative lower side 15 of the housing 43 and in the direction opposite to the forward direction of movement or driving direction 45 of the cleaning unit 20. The front blade- or plate-shaped sliding part 35 and the rear blade- or plate-shaped sliding part 36 are further flattened at their engagement end on the continuous base arrangement 1 such that each blade- or plate-shaped sliding part 35, 36 engages over at least its wall thickness on the continuous base arrangement 1 and as much as possible parallel to the surface of the continuous base arrangement 1 of the manure passage 9.

A suction mouth 28 with two blade- or plate-shaped sliding parts 35, 36 arranged opposite each other and parallel or nearly parallel at a distance from each other has the advantage that, seen in the continuing direction of travel 45 of the independently moveable cleaning unit 20, the rear blade- or plate-shaped sliding part 36 effects an additional post-cleaning of the continuous base arrangement 1 cleaned by the front blade- or plate-shaped sliding part 35 which, due to the vacuum present in the suction mouth 28 and the flow through the fluid flow channel 31, results in a clean, hand-dry continuous base arrangement 1.

To enhance the drying action of the compressed air flow 27, in an embodiment of the invention, the cleaning unit 20 may be provided with an electric heating device (not shown), for heating the air supplied to an air knife 21.

Figure 4 shows schematically, not to scale, a bottom view of a further embodiment of a cleaning unit 55 according to the invention, wherein the elongated suction mouth 28 of the cleaning unit 20 disclosed above has been replaced by a suction mouth 56 having a dish-shaped housing provided with an airtightly sealed flexible raised periphery 58 having a free peripheral edge 59 which delimits a receiving opening 60. The upright periphery 58 extends transversely to and outside the housing 43 of the cleaning unit 55 in such a manner that during operation of the cleaning unit 55 it contacts the load-bearing surface of a floor 1 of a manure passage 9 to be cleaned, whereby the receiving opening 60 is then located opposite a manure film 12 on this floor 1 and engages to the manure film 12.

A rotatable frame or platform 61 is located in the suction mouth 56 on which air knives 21 are mounted in a diagonal direction, in the form of elongated tubes with a slit-shaped opening 22 for generating a laminar air flow in the suction mouth 56 transverse to the receiving opening 60.

The frame or platform 61 is arranged to be cyclonal rotationally driven in the suction mouth 56 as indicated by the curved arrow 57. For this cyclonic drive, one or more blades 62 are provided, which by their shape and under the influence of the air flow in the suction mouth 56 rotate the frame or platform 61 during operation.

Further, the cleaning unit 55 may be arranged in the same manner as discussed above and shown on the basis of the cleaning unit 20, where the manure scraper 19 is again optional and the raised periphery 58 herein may comprise a cover surrounding the suction mouth formed of, for example, a flexible silicone rubber which cover engages the manure film 12 during operation.

Figures 5a and 5b show schematically, not to scale, a yet further embodiment of a cleaning unit 70 implemented as an independent moveable unit. Figure 5a shows the cleaning unit 70 seen on the operative lower side 15 thereof and Figure 5b shows partially in cross-section and elevation the cleaning unit 70 in the operative state thereof placed on a continuous base arrangement 1.

In the embodiment shown, the metal or plastic housing 43 includes a further collection container 71 located at the front, viewed in the operative direction of movement 45 of the cleaning unit 70, for collecting therein manure mass 7 accumulated by a shoving system 75 of the cleaning unit 70 during operation.

For this purpose, the further collection container 71 is provided with an inlet opening 72 located on the operative lower side 15 of the cleaning unit 70 and a further suction device 74 connected to the further collection container 71.

In the illustrated embodiment of the cleaning unit 70, the shoving system 75 comprises a raised blade- or plate-shaped shoving part extending transversely across the operative width of the cleaning unit 70, viewed in the advancing direction of movement or the operative direction of movement of the cleaning unit 45, with dimensions transverse to the operative lower side 15 such that this blade- or plate-shaped shoving part scrapes across a floor to be cleaned during operation of cleaning unit 70, for collecting manure that has been shoveled together.

In the illustrated embodiment, this blade- or plate-shaped scraper part is formed by two elongated silicone rubbers 76, 77 arranged flush with and parallel to each other in a tapered shape. In this way, a sufficient scraping action over a floor is obtained, on the one hand, and sufficient resistance is provided to the pressure of the slurry mass 7 pushed up to prevent it from entering the rear suction mouth 28.

Further, the shoving system 75 comprises a blade- or plate-shaped baffle 78 located on each side of the housing. which delimit an inlet mouth of the shoving system 75.

The further suction device 74, which may be a self-contained air suction pump or vacuum pump or, for example, a further cyclone or vortex separator operating according to the cyclone technique described above, with an air outlet 84 located outside the housing 43, is arranged to create a negative pressure in the further collection container 71 during operation. In this way, during operation of the cleaning unit 70, accumulated manure mass 7 is drawn into the further collection container 71 via the inlet opening 72 and held therein until the further collection container 71 is emptied at an unloading and charging point 2.

In this embodiment of the cleaning unit 70, the further collection container 71 is arranged for taking into the cleaning unit 70 accumulated manure mass 7 collected by the shoving system 75 during its route across a manure passage 9. This further collection container 71 is separated from the collection container 39 that connects to the suction mouth 28 for taking up dislodged manure film 47.

In the illustrated embodiment of the cleaning unit 70, the air knife 21 is directed almost perpendicularly, transversely to the receiving opening 30 of the suction mouth 28, such that a produced elongated blade-shaped laminar airflow 27 engages almost perpendicularly with a manure film 12 of a floor 1 to be cleaned, for effecting the scraping function described above for dislodging 47 the manure film 12 during operation. It will be appreciated that the air knife 21 may also be arranged for engaging the manure film 12 at an angle θ transverse thereon, as illustrated in Figures 3b, 3c.

In the embodiment of the cleaning unit 70 shown, the suction mouth 28 is formed by two blade- or plate-shaped sliding parts 35, 36 with ends 37 formed of a flexible silicone rubber.

The collection container 39 of the cleaning unit 70 is provided with a discharge arrangement for discharging from the collection container 39 dislodged manure film 47 or slurry 13 contained therein during operation. In the embodiment shown, this discharge arrangement comprises a discharge opening 79 of the collection container 39 located on the operative lower side 15 of the cleaning unit 70 and extending over the operative width of the cleaning unit 70. This discharge opening 79 can be opened and closed by means of a hinged discharge valve 80, as schematically indicated by a curved double arrow. The discharge valve 80 is preferably arranged to be opened and closed automatically under control of the control software 33, for example when unloading the collection container 39 at an unloading and charging point 2.

The further collection container 71 of the cleaning unit 70 is provided with a further discharge arrangement for unloading from the collection container 71 manure mass 7 contained therein during operation. This further discharge arrangement, in the illustrated embodiment, comprises a further discharge opening 85 of the further collection container 71 located at the operative lower side 15 of the cleaning unit 70 at a distance from the inlet opening 72 and extending over the operative width of the cleaning unit 70. This further discharge opening 85, which does not coincide with the inlet opening 72 of the further collection container 71, can be opened and closed by means of a hinged further discharge valve 86, as schematically indicated by a curved double arrow. The further discharge valve 86 is preferably arranged to be opened and closed automatically under control of the control software 33, for example when unloading the further collection container 71 at an unloading and charging point 2.

For unloading manure mass 7 and/or dislodged manure film 47 or slurry 13 collected in one or both collection containers 39, 71, the air compression means 23 thereof are connected via an intermediate two- or three-way distribution valve 82 not only via the air line 26 to the air knife 21, but also via an air line 81 to one or both collection containers 39, 71.

The air conduit 81 is preferably arranged in one or both of the collection containers 39, 71 in such a way that a driving force in the direction of the discharge opening 79 respectively the further discharge opening 85 is exerted on the matter 7; 13 collected in the collection container 39 and/or further collection container 71 when unloading the same in, for example, an unloading and charging point 2, as schematically indicated by arrows shown with a dashed-dotted line in the collection containers.

In this way, in one or both of the collection containers 39, 71 simultaneously or separately during unloading thereof, an overpressure may be caused by activating the air compression means 23, for removing from the one or both of the collection containers 39, 71 matter collected therein. That is, via the further discharge opening 85 of the further collection container 71 and via the discharge opening 79 of the collection container 39. In this way, the connections of the air compression means 23 to the collection containers 39, 71 are also kept clean.

If desired, the collection containers 39, 71 can be provided with an internal coating with such adhesive properties that the manure mass 7 and/or the manure film 47 and slurry 13 do not stick to them.

The air compression means 23 may also be coupled, for example, with a suction mouth 28, 56 in such a way that an intermediate burst of air may be provided therein for cleaning the suction mouth 28, 56.

An unloading and charging point 2 may furthermore be structurally arranged in such a way that a cleaning unit 20, 55, 70 is brought into an inclined position for unloading, in which the cleaning unit 20, 55, 70 is positioned higher relative to the floor at its front and/or rear side, viewed in the operative direction of movement or direction of travel 45, than at its rear and/or front respectively, such that one or both of the collection containers 39, 71 can be easily emptied under the influence of gravity via a respective discharge opening 79, 85 (not shown).

It will be appreciated that such an inclined position can also be achieved by mechanical means, for example by means of a lifting mechanism automatically operated by the control and communication software 33 at an unloading and charging point 2 and/or by a lifting mechanism attached to a cleaning unit 20, 55, 70 (not shown).

A person skilled in the art will appreciate that also in the embodiment of the cleaning unit 20 as shown in Figures 3a, 3b and 3c, the air compression means 23 may be connected to the collection container 39 for emptying thereof via discharge means in the form of, for example, a discharge opening 79 with valve 80, as shown in Figures 5a, 5b.

In an embodiment of the cleaning unit 20, 55 and 70, it may include a liquid container for holding cleaning liquid (not shown), with at least one liquid spray nozzle or spray valve 53 connected to this liquid container for spraying cleaning liquid into the suction mouth 28, 56. Such liquid spray nozzles or spray valves 53 may be located, for example, at the ends of an air knife 21, wherein in the embodiment with a rotatable air knife they are directed such that a force is applied on the frame or platform 61 during operation for causing it to rotate.

In a still further embodiment of the cleaning unit 20, 55, 70, one or more spray nozzles or spray valves 87, 88 are provided in the internal collection container 39 and/or the further collection container 71 for cleaning thereof, as shown schematically in Figure 5b with dashed lines. These spray nozzles 87, 88 are preferably arranged such that a rotating fluid jet or fluid jets are operative in the collection container 39 and/or further collection container 71 for the internal cleaning thereof after discharging the manure mass and/or dislodged manure film or slurry in an unloading and charging point 2. The cleaning liquid required for this purpose, such as for example water or a disinfecting liquid, may be provided by a liquid container present in the cleaning unit 20, 55, 70 or, for example, by a liquid container or liquid connection in an unloading and charging point 2, which needs no further explanation for a person skilled in the art.

In practice, the length dimensions of a cleaning unit 20, 55, 70 according to the present invention, measured in the direction of the forward movement 45 thereof, are in the order of 120 - 160 cm, with a width measured transversely thereto in the order of 100 - 130 cm and height dimensions in the order of 50 - 70 cm, where manure with a total weight in the order of 300 - 500 kg can be taken up.

The air compression means such as an air compressor or blower 23 should be suitably dimensioned to produce a laminar air flow with a velocity in the order of 18 - 24 m/sec. In practice, such a laminar air flow has been shown to effectively clean the floor of a manure passage with a manure film present thereon by the cleaning unit according to the present invention.

For example, the dimensions of a manure passage 9 commonly used in practice are length L = 60 m and width B = 3.5 m with an effective operative surface of 210 m². A manure passage of these dimensions can accommodate 55 - 80 stable animals such as cows, for example.

On average, the animals spend about 16 hours a day in the cubicles and about 8 hours on the manure passage 9. On the manure passage, they produce approx. 95 % of the day's output of urine and manure. The remaining approx. 5 % falls on the transition from the cubicles 8. Most of the manure production takes place in the morning hours from about 05:00 to 09:00 h and in the evening hours from about 16:00 to 20:00 h.

An implementation form suitable for cleaning these manure passages comprises a combination of one or more independently moveable cleaning units 20, 55, 70 whether or not equipped with a shoving system 19, 75. The composition of this combination of independently moveable cleaning units 20, 55, 70 depends, inter alia, on the size of a livestock shed, the type and composition of the livestock, the residence time of the livestock in a livestock shed, the type of manure, the season of the year, etc.

The routes through a cattle shed are also determined on the basis of the available battery capacity of a rechargeable power pack 38. The aim will be to achieve a calculated excess capacity of cleaning units 20, 55, 70 in a stable environment 18 so that in the event of failure of a cleaning unit 20, 55, 70, sufficient capacity of independently moveable cleaning units 20, 55, 70 remains to effectively and repeatedly clean the stable environment 18.

Such adjustments and controls are managed by the control software 33 and communication software 34 and, if necessary, can be automated using suitable computing devices and algorithms, recording devices for animals present or similar detection means.

The invention further provides a computer program product, comprising computer program code means stored on a computer-readable medium, which computer program code means are arranged to perform the above-described functionality of the control and communication software, when the computer program code means are executed by a computer.

Further modifications and adaptations are conceivable for an expert based on the embodiments described above, where features and means of the various embodiments shown and described may be combined or interchanged, and such further modifications and adaptations are all deemed to be encompassed by the enclosed claims.

## Claims

1. Cleaning unit (20; 55; 70), arranged to move independently over a load-bearing surface of an at least continuous floor (1) of a manure passage (9) of an arrangement (18) for keeping stable animals (11), comprising a collection container (39) and an air-flow suction arrangement (20 - 28) having a suction mouth (28; 56) comprised by an airtightly sealed raised periphery (35 - 37; 58) with a peripheral edge (29; 59) delimiting a receiving opening (30; 60) which, during operation of the cleaning device (20; 55; 70), faces a manure film (12) present on the load-bearing surface of a floor to be cleaned (1), and a suction device (23 - 26) engaging the suction mouth (28; 56), **characterized by** at least one air knife (21) located in the suction mouth (28; 56) and connected to air compression means (23) of the cleaning unit (20; 55; 70) arranged to operatively generate in the receiving opening (30; 60) of the suction mouth (28; 56) a laminar air flow (27) which transversely engages the manure film (12) during operation of the cleaning unit (20; 55; 70) for dislodging the manure film (12), wherein the suction device (23 - 26) is arranged to suck up the dislodged manure film (47) into the suction mouth (28; 56) and to transfer same via the suction device (23 - 26) to the collection container (39).

2. The cleaning unit (20; 70) according to claim 1, wherein the suction mouth (28) is elongated in shape and the at least one air knife (21) comprises a tubular housing with an elongated slit-shaped opening (22) located in longitudinal direction of the suction mouth (28) for generating the laminar air flow (27).

3. The cleaning unit (20; 70) according to one or more of the preceding claims, wherein the raised periphery (35 - 37) of the suction mouth (28) comprises two parallel and spaced apart flexible blade- or plate-shaped sliding parts (35, 36), which blade- or plate-shaped sliding parts (35, 36) extend beyond a housing (43) of the cleaning unit (20; 70) to such an extent that during operation of the cleaning unit (20; 70) they engage the load-bearing surface of the floor to be cleaned (1).

4. The cleaning unit (55) according to claim 1, wherein the suction mouth (56) comprises a dish-shaped housing with a frame or platform (61) rotatably arranged in the suction mouth (56), on which frame or platform (61) at least one elongated air knife (21) is mounted in a diagonal direction, which frame or platform (61) is arranged to be driven in a cyclonic rotation (57) in the suction mouth (56).

5. The cleaning unit (20; 55; 70) according to one or more of the preceding claims, wherein the suction device (23 - 26) comprises a matter-particles or solids separator (24), for separating solid manure particles from the suctioned manure film (47) and arranged for collecting the solid manure particles in the collection container (39) as slurry (13).

6. The cleaning unit (20; 55; 70) according to claim 5, wherein the matter-particles or solids separator (24) comprises at least one cyclone or vortex separator, having a matter inlet, a matter outlet and an air outlet, wherein the matter inlet engages the suction mouth (28; 56), the matter outlet engages the collection container (39) and the air outlet is connected to the air compression means (23), for providing a circular air system, in particular wherein the air compression means (23) comprise a blower.

7. The cleaning unit (20; 55; 70) according to one or more of the preceding claims, wherein the collection container (39) is provided with a discharge arrangement (79, 80) and the air compression means (23) are connected to the collection container (39) for producing an overpressure in the collection container (39) for discharging through the discharge arrangement (79, 80) from the collection container (39) dislodged manure film (47) or slurry (13) collected therein, in particular wherein the discharge arrangement (79, 80) comprises a discharge opening (79) of the collection container (39) located on the operative lower side (15) of the cleaning device (20; 55; 70) and which can be automatically opened and closed by a discharge valve (80).

8. The cleaning unit (20; 55; 70) according to one or more of the preceding claims, further comprising heating means for heating air supplied to an air knife (21).

9. The cleaning unit (20; 55; 70) according to one or more of the preceding claims, further comprising a shoving system (19; 75), for moving manure mass (7) in a manure passage (9), located at a front side of the cleaning unit (20; 55; 70) viewed in the operative direction of movement (45) of the cleaning unit (20; 55; 70), wherein the suction mouth (28; 56) viewed in the operative direction of movement (45) of the cleaning unit (20; 55; 70) is located behind the shoving system (19; 75), in particular wherein the shoving system (19; 75) comprises a flexible blade- or plate-shaped shoving part (52; 76, 77) that engages with the load-bearing surface of the floor to be cleaned (1) during operation of the cleaning device (20; 55; 70).

10. The cleaning unit (70) according to claim 9, provided with a further collection container (71) and a further suction device (74) connected to the further collection container (71), wherein the shoving system (75) comprises an inlet opening (72) connected to the further collection container (71) and the further suction device (74) is arranged for providing an underpressure in the further collection container (71) for receiving in the further collection container (71) during operation of the cleaning unit (70) and retaining therein manure mass (7) pushed by the shoving system (75) in front of the inlet opening (72), wherein the further collection container (71) is provided with a further discharge arrangement (85, 86) separate from the inlet opening (72) for discharging manure mass (7) collected in the further collection container (71).

11. The cleaning unit (70) according to claim 10, wherein the air compression means (23) are connected to the further collection container (71) for providing an overpressure in the further collection container (71) for discharging via the further discharge arrangement (85, 86) from the further collection container (71) manure mass collected therein (7), in particular wherein the further discharge arrangement (85, 86) comprises a further discharge opening (79) of the further collection container (71) located on the operative lower side (15) of the cleaning device (20; 55; 70) spaced apart from the inlet opening (72) and which can be automatically opened and closed by a further discharge valve (80).

12. The cleaning unit (20; 55; 70) according to one or more of the preceding claims, comprising a liquid container for holding cleaning liquid, having at least one liquid spray nozzle or spray valve (53) connected to the liquid container for spraying cleaning liquid into the suction mouth (28; 56), in particular wherein the at least one liquid spray nozzle or spray valve (53) is arranged at an air knife (21).

13. The cleaning unit (20; 55; 70) according to one or more of the preceding claims, comprising one or more electric drive means (54) for moving the cleaning unit (20; 55; 70), control and communication equipment (32, 33, 34) and one or more sensors (32) for controlling the drive means (54) for independent operation of the cleaning unit (20; 55; 70), and one or more rechargeable electric batteries (38) for supplying electrical energy to the drive means (54), the control and communication equipment (32, 33, 34), the sensors (32), the air compression means (23) and, if applicable, heating means and liquid spray nozzles or spray valves (53), in particular comprising computer control and communication equipment (34) equipped with control and communication software (33) for moving a cleaning unit (20; 55; 70) according to a pre-programmed route, and more particularly wherein the control and communication software (33) is arranged for communication with multiple cleaning units (20; 55; 70) operating in a stable environment, for moving the cleaning units (20; 55; 70) along a manure passage (9) in such a way that urease-urea reactions due to frequent and cyclic deployment of the cleaning units (20; 55; 70) are limited or excluded in terms of reaction time.

14. The cleaning unit (20; 55; 70) according to claim 13, wherein a stable environment (18) is equipped with one or more unloading and charging points (2) for unloading manure mass (7), dislodged manure film (47) or slurry (13) collected by a cleaning unit (20; 55; 70), wherein the control and communication software (33) is arranged for moving the cleaning unit (20; 55; 70) to an unloading and charging point (2) for automatically unloading collected manure mass (7), dislodged manure film (47) or slurry (13) and charging the batteries (38), in particular wherein an unloading and charging point (2) is provided with a cleaning mechanism (40, 41) for cleaning a cleaning unit (20; 55; 70), and wherein the control and communication software (33) is arranged for activating the cleaning mechanism (40, 41).

15. Method of removing a manure film (12) present on a load-bearing surface of an at least continuous floor (1) of a manure passage (9) of an arrangement (18) for keeping stable animals (11), which method comprises:
- independently moving one or more cleaning units (20; 55; 70) arranged for removing the manure film (12) over the load-bearing surface of the at least continuous floor (1) of a manure passage (9);
- transversely engaging the manure film (12) by at least one laminar air stream (27) produced by an air knife (21) of one or more cleaning units (20; 55; 70) during movement thereof, wherein dislodged manure film (47) by the at least one laminar air stream (27) is collected by the at least one or more cleaning units (20; 55; 70), and
- independently moving the one or more cleaning units (20; 55; 70) to an unloading or discharge point (64) of the arrangement (18) for keeping stable animals (11) and automatically unloading collected manure film (47) in this unloading or discharge point (64).
